# EUROPÄISCHE PATENTSCHRIFT

(11) **EP 3 387 337 B1**
(45) Veröffentlichungstag und Bekanntmachung des Hinweises auf die Patenterteilung: **07.06.2023**
(21) Anmeldenummer: 16826012.3
(22) Anmeldetag: 09.12.2016
(51) Int. Cl.: F25B 23/00

(54) **VERFAHREN UND VORRICHTUNG ZUM BETRIEB KREISPROZESSBASIERTER SYSTEME**
METHOD AND APPARATUS FOR OPERATING CYCLIC PROCESS-BASED SYSTEMS
PROCÉDÉ ET DISPOSITIF DE FONCTIONNEMENT DE SYSTÈMES BASÉS SUR DES CYCLES

(30) Priorität: 11.12.2015 DE 102015121657; 14.01.2016 DE 102016100596
(43) Veröffentlichungstag der Anmeldung: 17.10.2018
(73) Patentinhaber: Fraunhofer-Gesellschaft zur Förderung der angewandten Forschung e.V., 80686 München (DE)
(72) Erfinder: BARTHOLOMÉ, Kilian, 79285 Ebringen (DE); HORZELLA, Jan, 86316 Friedberg (DE); MAHLKE, Andreas, 79215 Biederbach (DE); KÖNIG, Jan, 79112 Freiburg (DE); VERGEZ, Marc, 79115 Freiburg (DE)
(74) Vertreter: LBP Lemcke, Brommer & Partner Patentanwälte mbB
(86) Internationale Anmeldenummer: PCT/EP2016/080461
(87) Internationale Veröffentlichungsnummer: WO 2017/097989

(56) Entgegenhaltungen:
- US-A1- 2012 273 158
- US-A1- 2015 075 184
- US-B1- 6 367 281

## Beschreibung

Die Erfindung betrifft ein Verfahren zum Betrieb kreisprozessbasierter Systeme gemäß dem Oberbegriff des Anspruchs 1 und eine Vorrichtung zum Transport oder zur Umwandlung von Energie gemäß dem Oberbegriff des Anspruchs 7.

Kreisprozesse sind aus der Thermodynamik bekannt als eine Folge von periodischen Zustandsänderungen eines Fluids, die regelmäßig einen Ausgangszustand durchlaufen. Bei Kreisprozessen wird zwischen Rechtsprozessen und Linksprozessen unterschieden. Beispiele für solche Kreisprozesse sind Umwandlung von Wärme in Arbeit, zum Beispiel in Wärmekraftmaschinen, oder das Heizen und/oder Kühlen durch Einsatz von Arbeit, wie zum Beispiel in Wärmepumpen.

Dabei ist es aus dem Stand der Technik bekannt, in solchen Kreisprozessen mechanokalorische Materialien einzusetzen.

Mechanokalorische Materialien (auch bekannt als Formgedächtnislegierungen) durchlaufen durch das Anlegen einer mechanischen Spannung einen kristallinen Phasenübergang (Veränderung der Kristallstruktur), welcher eine Temperaturänderung des Materials hervorruft. Hierbei handelt es sich üblicherweise um eine Kristallgitterumwandlung zwischen einer Hochtemperaturphase (Austenit) und einer Niedrigtemperaturphase (Martensit). Genauso kann umgekehrt durch eine Temperaturänderung des Materials eine Form- und/oder Volumenänderung, beispielsweise eine Ausdehnung oder Kompression, des Materials induziert werden. Der kristalline Phasenübergang kann also sowohl durch das Anlegen einer mechanischen Spannung als auch mit dem umgekehrten Effekt durch eine Temperaturänderung herbeigeführt werden.

Dabei zeigen mechanokalorische Materialien typischerweise im Wesentlichen reversible thermische Veränderungen in Reaktion auf ein angelegtes mechanisches Spannungsfeld. Zu den mechanokalorischen Materialien gehören die elastokalorischen Materialien und die barokalorischen Materialien. Elastokalorische Materialien zeigen mechanokalorische Wirkungen in Reaktion auf eine Änderung der uniaxialen mechanischen Spannung (auch piezokalorisch genannt). Barokalorische Materialien zeigen einen mechanokalorischen Effekt als Reaktion eine isotrope Beanspruchung, das heißt Veränderungen im hydrostatischen Druck.

Unter einer mechanischen Spannung wird vorliegend allgemein eine mechanische Kraft, eine Druckbeaufschlagung, eine Zug- oder Druckbelastung, eine Torsion, eine Scherung oder eine entsprechende Einwirkung auf das mechanokalorische Material verstanden.

Dieser oben beschriebene mechanokalorische Effekt kann in kreisprozessbasierten Systemen, insbesondere bei Verfahren und Vorrichtungen zum Transport und/oder zur Umwandlung von Energie mittels einer Wärmepumpe und/oder einer Wärmekraftmaschine eingesetzt werden.

Dazu ist aus dem Stand der Technik bekannt, mechanokalorische Materialien in Kältesystemen einzusetzen, um über einen Fluidkreislauf Wärme von einer Kaltseite zu einer Heißseite zu transportieren. Dabei wird das mechanokalorische Material typischerweise als Wärmetauscher in einem Fluidkreislauf in Wirkverbindung mit Heißseite und Kaltseite angeordnet.

Beispielsweise zeigt die US 2012/0273158 A1 eine Kältemaschine. Die Kältemaschine weist eine Heißseite und eine Kaltseite auf, wobei Wärme von der Kaltseite zu der Heißseite transportiert wird. Dazu wird ein thermoelastisches Material einer mechanischen Spannung ausgesetzt. Durch das Anlegen einer mechanischen Spannung wird in dem thermoelastischen Material ein Phasenübergang initiiert. Die bei dem Phasenübergang entstehende Temperaturänderung erwärmt die Heißseite. Anschließend wird die mechanische Spannung entfernt und mit der durch die Phasenumwandlung entstehende Temperaturänderung die Kaltseite abgekühlt.

Nachteilig an den bekannten Vorrichtungen und Verfahren aus dem Stand der Technik ist, dass der Übertrag der Wärme und damit der Transport oder die Umwandlung der Energie lediglich mit einem geringen Wirkungsgrad, das heißt mit einer geringen Effizienz, erfolgt.

Der vorliegenden Erfindung liegt daher die Aufgabe zugrunde, ein Verfahren zum Betrieb kreisprozessbasierter Systeme, eine Wärmeübertragereinheit und eine Vorrichtung zum Transport und/oder zur Umwandlung von Energie vorzuschlagen, die einen im Vergleich zu vorbekannten Systemen höheren Wirkungsgrad aufweisen.

Gelöst wird diese Aufgabe durch ein Verfahren zum Betrieb kreisprozessbasierter Systeme gemäß Anspruch 1 sowie durch eine Vorrichtung zum Transport oder zur Umwandlung von Energie gemäß Anspruch 7. Bevorzugte Ausgestaltungen des erfindungsgemäßen Verfahrens finden sich in den Ansprüchen 2 bis 6.

Bevorzugte Ausgestaltungen der erfindungsgemäßen Vorrichtung finden sich in den Ansprüchen 8 bis 15.

Hiermit wird der Wortlaut sämtlicher Ansprüche explizit per Referenz in die Beschreibung einbezogen.

Das erfindungsgemäße Verfahren ist vorzugsweise zur Durchführung mittels der erfindungsgemäßen Vorrichtung und/oder einer bevorzugten Ausführungsform der Vorrichtung ausgebildet. Die erfindungsgemäße Vorrichtung ist vorzugsweise zur Durchführung des erfindungsgemäßen Verfahrens und/oder einer bevorzugten Ausführungsform des erfindungsgemäßen Verfahrens ausgebildet.

Das erfindungsgemäße Verfahren zum Betrieb kreisprozessbasierter Systeme wird, wie an sich bekannt, mit einem kreisprozessbasiertem System mit einem Heißseitenreservoir und einem Kaltseitenreservoir für ein Fluid und zumindest einer Wärmeübertragereinheit mit mechanokalorischem Material durchgeführt, wobei das mechanokalorische Material der Wärmeübertragereinheit in Wirkverbindung mit dem Fluid angeordnet ist, sodass ein Wärmeübertrag zwischen dem mechanokalorischen Material und dem Fluid stattfindet.

Wesentlich ist, dass der Wärmeübertrag zwischen mechanokalorischem Material und Fluid im Wesentlichen mittels latenten Wärmeübertrags, d. h. Verdampfungs- und Kondensationswärme, erfolgt.

Die Erfindung ist in der Erkenntnis des Anmelders begründet, dass die Wärmeübertragung von dem Fluid auf die Wärmeübertragereinheit aus mechanokalorischem Material mittels latentem Wärmeübertrag besonders effektiv ist und damit den Wirkungsgrad des Verfahrens signifikant verbessert. Die Effektivität des Wärmetransports wird durch die Realisierung des Wärmetransports mittels latenter Wärme (das heißt Verdunstungs- und Kondensationswärme) signifikant gesteigert.

Das erfindungsgemäße Verfahren unterscheidet sich somit in wesentlichen Aspekten von vorbekannten Verfahren:
Der Wärmeübertrag von dem Fluid auf das mechanokalorische Material der Wärmeübertragereinheit sowie von dem mechanokalorischen Material auf das Fluid erfolgt bei dem erfindungsgemäßen Verfahren durch latente Wärme. Das Fluid kondensiert auf dem mechanokalorischen Material und gibt dabei Wärme an die Wärmeübertragereinheit ab oder das kondensierte Fluid auf der Wärmeübertragereinheit verdampft und nimmt dabei Wärme auf. Dies ermöglicht einen sehr effektiven Wärmetransport, ungefähr zwei Größenordnungen höher als über den geführten Transport von Flüssigkeiten zum Beispiel durch Pumpen. Dieser Wärmeübertrag über latente Wärme ermöglicht auch eine höhere Frequenz zwischen Abkühlen und Erwärmen des kalorisch wirksamen Materials.

Insgesamt führt dies zu einer Erhöhung des Wirkungsgrades im Vergleich zu vorbekannten Systemen.

Die Wärmeübertragereinheit für eine Wärmepumpe oder eine Wärmekraftmaschine ist mit mechanokalorischem Material ausgebildet, wobei das mechanokalorische Material in Wirkverbindung mit einem Fluid angeordnet ist, sodass Wärme zwischen Fluid und mechanokalorischem Material übertragbar ist.

Die Wärmeübertragereinheit ist aus mechanokalorischem Material ausgebildet. Es liegt jedoch ebenso im Rahmen der Erfindung, dass beispielsweise eine Halterung aus beliebigem anderen Material Teil der Wärmeübertragereinheit ist. Mittels der Wärmeübertragereinheit wird Wärme durch mittelbaren oder unmittelbaren thermischen Kontakt von dem mechanokalorischen Material auf das Fluid und umgekehrt übertragen. Erfindungsgemäß erfolgt der Wärmeübertrag zwischen Fluid und mechanokalorischem Material im Wesentlichen mittels latenten Wärmeübertrags, d.h. durch Verdampfen und Kondensieren des Fluids im thermischen Kontakt mit dem mechanokalorischen Material der Wärmeübertragereinheit.

Die erfindungsgemäße Vorrichtung zum Transport oder zur Umwandlung von Energie umfasst, wie an sich bekannt, ein Heißseitenreservoir und ein Kaltseitenreservoir für ein Fluid und zumindest eine Wärmeübertragereinheit mit mechanokalorischem Material. Das mechanokalorische Material ist in Wirkverbindung mit dem Fluid angeordnet, sodass Wärme zwischen Fluid und mechanokalorischem Material übertragbar ist. Darüber hinaus weist die Vorrichtung Mittel zur Erzeugung einer mechanischen Spannung in dem mechanokalorischen Material auf, sodass das mechanokalorische Material in einem Wechselwirkungsbereich eines mechanischen Spannungsfeldes angeordnet ist, oder Mittel zur Anwendung von Energie aus Bewegung, welche in Wirkverbindung mit dem mechanokalorischen Material angeordnet sind.

Wesentlich ist, dass der Wärmeübertrag zwischen Fluid und mechanokalorischem Material im Wesentlichen mittels latenter Wärme erfolgt.

Die erfindungsgemäße Vorrichtung weist ebenfalls die genannten Vorteile des erfindungsgemäßen Verfahrens auf. Ebenso weist das erfindungsgemäße Verfahren alle genannten Vorteile der erfindungsgemäßen Vorrichtung auf.

Wie beschrieben durchlaufen mechanokalorische Materialien durch das Anlegen einer mechanischen Spannung einen Phasenübergang, welcher eine Temperaturänderung des Materials hervorruft. Genauso kann umgekehrt durch eine Temperaturänderung des Materials eine Form- und/oder Volumenänderung, beispielsweise eine Ausdehnung oder Kompression, des Materials induziert werden. Durch die Mittel zur Erzeugung einer mechanischen Spannung kann das mechanokalorischen Material mit einer mechanischen Spannung beaufschlagt werdn.

Stehen solche mechanokalorischen Materialien in Wirkverbindung mit einem Fluid, erwärmt sich beim Anlegen der mechanischen Spannung das mechanokalorische Material, das Fluid verdampft und nimmt mittels latenten Wärmeübertrags Verdunstungswärme von dem mechanokalorischen Material auf. So kann die in dem mechanokalorischen Material entstehende Wärme mittels des Fluids abgeführt werden und das mechanokalorische Material kühlt auf Umgebungstemperatur ab. Wird nun das mechanische Spannungsfeld entfernt, kommt es aufgrund des Phasenübergangs zu einer weiteren Abkühlung des Materials, sodass ein entsprechend in Wirkverbindung stehendes Fluid abgekühlt werden kann und auf dem mechanokalorischen Material kondensiert. Das mechanokalorische Material nimmt mittels latenten Wärmeübertrags Kondensationswärme von dem Fluid auf.

Der inverse Effekt liegt ebenso im Rahmen der Erfindung: das mechanokalorische Material kann sich beim Anlegen einer mechanischen Spannung abkühlen und bei einem Entfernen des mechanischen Spannungsfeldes erwärmen. Die Temperaturänderung wird dann entsprechend mittels latenten Wärmeübertrags von dem und auf das Fluid übertragen.

Umgekehrt ist es auch möglich, durch Erwärmen und Abkühlen des mechanokalorischen Materials mittels latenten Wärmeübertrags von oder zu dem Fluid eine Form- und/oder Volumenänderung des mechanokalorischen Materials zu erzeugen.

Vorzugsweise wird als mechanokalorisches Material eine Legierung eingesetzt, die einen Übergang zwischen verschiedenen kristallinen Phasen aufweist, wie beispielsweise eine Nickel-Titan-Legierung (Phasenwechsel zw. Austenit und Martensit). Vorzugsweise werden folgende Materialien Fe68.8Pd31.2, Cu69.6Al27.7Ni2.7, Cu68.1Zn15.8Al16.1, Cu64.6Zn33.7Sn1.7, Fe49Rh51, ZrO2, Ni49.26Mn36.08ln14.66, Gd5Si2Ge2, LaFe11.33Co0.47Si1.2 eingesetzt.

Die Druckbelastung des mechanokalorischen Materials liegt vorzugsweise im Bereich zwischen 100 und 900 MPa. Beispielsweise kann mit einer Druckbelastung von ≈ 500 MPa eine Temperaturänderung von über 40° Celsius initiiert werden.

Alternativ können in mechanischer Wirkverbindung mit dem mechanokalorischen Material Mittel zur Anwendung von Energie aus Bewegung angeordnet sein. Dabei kann eine Anwendung von Energie aus Bewegung jede Nutzung, Umwandlung oder Transport von Energie sein.

Die Bewegungsenergie kann beispielsweise direkt genutzt werden, um mechanische Arbeit zu verrichten. Durch die Bewegung könnte beispielsweise ein Exzenter angetrieben werden.

Es kann jedoch auch elektrischer Strom aus der Bewegung induziert werden. Dies lässt sich beispielsweise über eine Spule mit einem vorzugsweise magnetisierbaren Kern realisieren. Der magnetisierbare Kern der Spule steht in mechanischer Wirkverbindung mit dem mechanokalorischen Material. Daher wird durch eine Temperaturänderung des mechanokalorischen Materials eine Bewegung des magnetisierbaren Kerns in der Spule erzeugt. Durch die Bewegung des Kerns in der Spule wird ein elektrischer Strom in der Spule induziert.

Das Heißseitenreservoir kann vorzugsweise Temperaturen von 10C°-1000°C, vorzugsweise von 50C°-350°C aufweisen. Das Kaltseitenreservoir kann vorzugsweise Temperaturen von 0 C°-500°C, vorzugsweise von 10C°-200°C aufweisen. Der herrschende Druck liegt vorzugsweise im Bereich von 1 mbar - 200 bar.

In einer bevorzugten Ausführungsform des erfindungsgemäßen Verfahrens wird eine Form- und/oder Volumenänderung des mechanokalorischen Materials durch eine Zug- und/oder Druckbelastung (mechanische Spannung) des mechanokalorischen Materials erzeugt. Durch die Zug- und/oder Druckbelastung des mechanokalorischen Materials wird eine Temperaturänderung des mechanokalorischen Materials erzeugt. Vorzugsweise umfasst die Vorrichtung Mittel zur Zug- und/oder Druckbelastung.

Vorzugsweise erfolgt die Formänderung durch Kompression des mechanokalorischen Materials. Hierdurch kann sich der Vorteil ergeben, dass sich gegenüber einer Zugbelastung Mikrorisse im Material nicht so schnell ausbreiten können und das mechanokalorische Material somit langlebiger ist.

Dabei erfolgt die Kompression des mechanokalorischen Materials der Wärmeübertragereinheit vorzugsweise über ein Kolbensystem, insbesondere mittels zumindest eines Zylinder-Kolben-Aggregats. Das mechanokalorische Material ist dabei im Inneren des Zylinders angeordnet und wird mittels des Kolbens komprimiert, sodass sich das mechanokalorische Material erwärmt.

Vorzugsweise sind der Kolben und das mechanokalorische Material der zumindest einen Wärmeübertragereinheit über eine starre, mechanische Verbindung miteinander verbunden, beispielsweise durch Kleben, Schweißen oder Fügen.

In einer weiteren bevorzugten Ausführungsform der Erfindung wird ein Transport des Fluids zwischen Heißseitenreservoir und Wärmeübertragereinheit durch ein Öffnen eines Heißseitenventils zwischen mechanokalorischem Material der Wärmeübertragereinheit und Heißseitenreservoir gesteuert und ein Transport des Fluids zwischen Kaltseitenreservoir und Wärmeübertragereinheit wird durch ein Öffnen eines Kaltseitenventils zwischen mechanokalorischem Material der Wärmeübertragereinheit und Kaltseitenreservoir gesteuert. Vorzugsweise sind das Heißseitenventil und das Kaltseitenventil als druckgesteuerte Ventile ausgebildet. Vorzugsweise werden passive Überdruckventile eingesetzt, welche sich in Vorwärtsrichtung schon bei kleinen Druckdifferenzen (Differenzdruck), beispielsweise << 10 mbar oder << 1 mbar öffnen, wohingegen in Rückwärtsrichtung ein Fluidstrom blockiert wird. Alternativ können auch aktiv gesteuerte Ventile eingesetzt werden.

Hierdurch ergibt sich der Vorteil, dass das Fluid bereits durch das Öffnen der Ventile, bevorzugt in gasförmiger Form, in dem Fluidkreislauf strömt und somit kein geführter Transport des Fluids erfolgen muss. Es werden also keine Pumpen benötigt. Dies steigert die Effizienz des Wärmetransports weiter und erlaubt auch eine höhere Frequenz zwischen Abkühlen und Erwärmen des mechanokalorischen Materials.

Das Verfahren wird zyklisch widerholt. Dabei können durch höhere Frequenzen im Fall einer Wärmepumpe größere Wärmepumpleistungen bzw. im Fall einer Wärmekraftmachine höhere Leistungen erzeugt werden.

In einer weiteren bevorzugten Ausführungsform der Erfindung ist das Verfahren für eine Wärmepumpe mit zumindest zwei Wärmeübertragereinheiten mit mechanokalorischem Material geeignet. Vorzugsweise wird die in der Kompression des mechanokalorischen Materials einer ersten Wärmeübertragereinheit enthaltene potenzielle Energie zur Kompression des mechanokalorischen Materials einer zweiten Wärmeübertragereinheit verwendet. Höchst vorzugsweise erfolgt die Kompression der beiden Wärmeübertragereinheiten alternierend, bevorzugt mit einer vorgebbaren Wechselfrequenz. Dies bedeutet, dass die durch die Kompression des mechanokalorischen Materials in dem Material gespeicherte elastische (potentielle) Energie abgegeben und zur Kompression der zweiten Wärmeübertragereinheit mit mechanokalorischem Material verwendet wird.

Dies kann beispielsweise durch eine mechanische Verbindung der zwei Wärmeübertragereinheiten über das mechanokalorische Material realisiert werden, analog zu einem Federschwinger mit zwei elastischen Federn und einem dazwischen angeordneten Gewicht. So kann das System in Schwingung versetzt werden, und in jedem Halbzyklus wird ein Teil der Energie aus der einen Wärmeübertragereinheit auf die andere übertragen.

Hierdurch ergibt sich der Vorteil, dass die gespeicherte potentielle Energie nicht verloren geht, sondern zur Kompression genutzt werden kann. Dies steigert die Effizienz des Verfahrens.

In einer alternativen Ausführungsform der Erfindung ist die Vorrichtung als Wärmekraftmaschine ausgebildet und weist eine Spule mit einem vorzugsweise magnetisierbaren Kern auf. Der magnetisierbare Kern der Spule ist mit dem Kolben gekoppelt oder entspricht dem Kolben und steht in Wirkverbindung mit dem mechanokalorischen Material. Daher wird durch eine Temperaturänderung des mechanokalorischen Materials eine Bewegung des magnetisierbaren Kerns in der Spule erzeugt. Durch die Bewegung des Kerns in der Spule wird ein elektrischer Strom in der Spule induziert.

Alternativ kann auch die Bewegung des Kolbens direkt als nutzbare mechanische Arbeit eingesetzt werden. Durch die Bewegung könnte beispielsweise ein Exzenter angetrieben werden.

In einer weiteren bevorzugten Weiterbildung ist das Verfahren für eine Wärmekraftmaschine mit zumindest zwei Wärmeübertragereinheiten mit mechanokalorischem Material geeignet. Die zumindest zwei Wärmeübertragereinheiten stehen jeweils in Wirkverbindung mit einem magnetisierbaren Kern in einer Spule. Durch die vorzugsweise alternierende Temperaturänderung der zwei Wärmeübertragereinheiten mit mechanokalorischen Materialien dehnen sich die Wärmeübertragereinheiten abwechselnd aus, sodass der magnetisierbarer Kern in einer Spule bewegt wird. Durch diese Hin- und Her-Bewegung wird in der Spule ein elektrischer Strom induziert.

Vorzugsweise weist die Wärmekraftmaschine Heißseitenventile und Kaltseitenventile auf, welche bevorzugt mit einer Wechselfrequenz zueinander alternierend geöffnet und geschlossen werden. Jeweils einer Wärmeübertragereinheit mit mechanokalorischem Material sind ein Heißseitenventil und ein Kaltseitenventil zugeordnet. Die Ventile werden derart alternierend geöffnet und geschlossen, dass die beiden Bereiche mit mechanokalorischem Material jeweils alternierend erwärmt und abgekühlt werden. Hierdurch ergibt sich eine ständige Hin- und Her-Bewegung des magnetisierenden Kerns in der Spule, die einen Wechselstrom induziert.

In einer weiteren bevorzugten Ausführungsform der Erfindung ist das mechanokalorische Material der Wärmeübertragereinheit als poröses Material, vorzugsweise als offenporiges Material ausgebildet. Hierdurch ergibt sich der Vorteil, dass eine große Oberfläche zwischen dem mechanokalorischen Material als Wärmeübertragereinheit und dem Fluid zum Übertrag von Wärme zur Verfügung steht, die Wärmeübertragung somit schnell stattfinden kann.

Erfindungsgemäß erfolgt nicht nur ein gerichteter Wärmetransport. Auch das Fluid wird bei den erfindungsgemäßen Verfahren sowie bei der erfindungsgemäßen Vorrichtung kontinuierlich aus einem Herkunftsreservoir in das verbleibende zweite Reservoir transportiert. Es droht somit ein Austrocknen des Herkunftsreservoirs. Die Vorrichtung ist mit einem Fluidkreislauf für das Fluid ausgebildet, welcher als druckdichtes System ausgebildet ist, insbesondere bevorzugt umfasst der Fluidkreislauf eine Fluidrückführung zwischen Heißseitenreservoir und Kaltseitenreservoir, sodass keines der beiden Reservoire austrocknet.

Eine Fluidrückführung ist insbesondere bei einer Realisierung als Wärmekraftmaschine vorteilhaft. Bei einer Wärmekraftmaschine kommt es zu einem Transport des Fluids von dem Heißseitenreservoir in das Kaltseitenreservoir, sodass ein Austrocknen des Heißseitenreservoirs droht.

Vorzugsweise ist die Fluidrückführung analog zu einem Flüssigkeitskreislauf einer Loop-Heatpipe ausgebildet. In einer Loop-Heatpipe sind Gas- und Flüssigkeitskreislauf voneinander getrennt. Die Trennung des flüssigen vom gasförmigen Bereich des Fluids erfolgt bevorzugt durch ein Wick bzw. Docht oder durch eine Drossel. Die Fluidrückführung ist vorzugsweise als ein mit einem Docht ausgefülltes Rohr ausgebildet. Hierdurch ergibt sich der Vorteil, dass neben einer effizienten Fluidrückführung auch ein Druckunterschied zwischen dem Heißseitenreservoir und dem Kaltseitenreservoir möglich ist. Die durch die Fluidrückführung übertragene Wärme ist vernachlässigbar, da sie alleine auf der Übertragung sensibler Wärme des Fluids beruht, welche um mehrere Größenordnungen kleiner als der Wärmeübertrag mittels latenter Wärme ist.

Bevorzugt ist die Fluidrückführung unter Einsatz von Rohren mit kleinem Durchmesser (Kapillaren) ausgebildet. Dies ist, wie oben beschrieben, bereits bei der Fluidrückführung in einer Loop-Heatpipe bekannt. Der Einsatz von Kapillaren ermöglicht einen Druckunterschied zwischen den beiden Reservoiren, der in bekannten Loop-Heatpipes beispielsweise zur Überwindung von Gravitationskräften eingesetzt wird.

Eine derartige Fluidrückführung ermöglicht daher auch einen großen Druckunterschied zwischen dem Heißseitenreservoir und dem Kaltseitenreservoir, beispielsweise im Bereich von 0,1 bis 6 bar. Ein Druckausgleich über die Fluidrückführung erfolgt nicht, da dieser Druckausgleich durch die Kapillarkräfte verhindert wird. Abhängig von der zu überwindenden Druckdifferenz werden entsprechend, analog zu der Ausgestaltung bei der Loop-Heatpipe, der Durchmesser bzw. die Anzahl der Kapillaren gewählt.

Die Durchmesser liegen bevorzugt im Bereich von einigen Nanometern bis hin zu mehreren Hundert Mikrometren. Der Durchmesser der Kapillaren ist dabei abhängig von dem zu überwindenden Druckunterschied zwischen Heißseitenreservoir und Kaltseitenreservoir gewählt. Beispielsweise ist es aus dem Stand der Technik bereits seit längerem bekannt, siehe beispielsweise US5839290 A oder US20100200199 A1, Kapillaren mit Durchmessern im Nanometerbereich herzustellen. Zur Überwindung großer Druckdifferenzen können mehrere Kapillaren parallel geschaltet werden.

Die Fluidrückführung ist vorzugsweise derart an das Herkunftsreservoir, insbesondere das Heißseitenreservoir angeschlossen, dass eine große Wechselwirkungsfläche an der Innenseite des Herkunftsreservoirs entsteht. Dies ermöglicht in einfacher Art und Weise einen ausreichenden Rücktransport des Fluids, um im kontinuierlichen Betrieb einen Gleichgewichtszustand zwischen Verdampfen und Rückführen des Fluids zu ermöglichen.

Alternativ kann die Fluidrückführung, insbesondere im Fall einer Wärmepumpe, auch als einfache Drossel ausgestaltet sein, analog zu klassischen Verdichtersystemen, wie sie heute in Kälteanlagen und Wärmepumpen verwendet werden. Alternativ kann die Fluidrückführung, insbesondere im Fall einer Wärmekraftmaschine, als aktive Pumpe ausgestaltet sein, die das Fluid von dem Heißseitenreservoir zurück in das Kaltseitenreservoir pumpt.

Dabei bildet der Fluidkreislauf mit Heißseitenreservoir, Kaltseitenreservoir, Heißseitenventil, Kaltseitenventil, mechanokalorischem Material und der Fluidrückführung das druckdichtes (gasdichtes) System. Dabei ist das druckdichte System derart ausgebildet, dass der Wärmeübertrag von dem Fluid auf das mechanokalorische Material mittels latenter Wärme erfolgt, indem im Wesentlichen aus dem druckdichten System alle Fremdgase (das heißt alle Gase mit Ausnahme des Fluids) entfernt sind. Hierdurch wird sichergestellt, dass durch Verdampfen und Kondensieren des Fluids die Wärme mittels latenten Wärmeübertrags sehr effizient übertragen wird, da in dem druckdichten System keine Diffusionsprozesse ablaufen. Der Wärmetransport in dem druckdichten System erfolgt also analog zu dem Wärmetransport in einer Heat Pipe bzw. einem Wärmerohr. Sind hingegen noch Fremdgase in signifikantem Ausmaß in dem druckdichten System vorhanden, so muss neben dem Verdampfungs- und Kondensationsprozess noch ein Diffusionsprozess stattfinden, der in der Regel deutlich langsamer ist.

In einer alternativen Ausführungsform der Erfindung sind Kaltseitenreservoir, Heißseitenreservoir und mechanokalorisches Material (Wärmeübertragereinheit) in einem gemeinsamen abgeschlossenen Volumen angeordnet. Dies bedeutet, dass zwischen Kaltseitenreservoir und Heißseitenreservoir lediglich die Wärmeübertragereinheit und keine weitere physische Trennung vorhanden ist. Das Kaltseitenreservoir ist in einem Bereich des Volumens angeordnet, das Heißseitenreservoir vorzugsweise in einem gegenüberliegenden Bereich des Volumens. Zwischen diesen Bereichen ist das mechanokalorische Material der Wärmeübertragereinheit angeordnet.

Wie oben beschrieben erfolgt erfindungsgemäß nicht nur ein gerichteter Wärmetransport. Auch das Fluid wird kontinuierlich aus einem Herkunftsreservoir in das verbleibende andere Reservoir transportiert. Es droht somit ein Austrocknen des Herkunftsreservoirs. Vorzugsweise ist das Volumen derart ausgebildet, dass der Wärmetransport mittels Konvektion des verdampften Fluids erfolgt und ein Rücktransport des kondensierten Fluids (Fluidrückführung) erfolgt, um ein Austrocknen des Herkunftsreservoirs zu verhindern.

In einer bevorzugten Ausführungsform der Erfindung weist das abgeschlossene Volumen an der Innenseite im Bereich des anderen Reservoirs, bevorzugt des Heißseitenreservoirs eine fluidphobe Beschichtung und/oder Strukturierung auf und/oder im Bereich des Herkunftsreservoirs, bevorzugt des Kaltseitenreservoirs eine fluidphile Beschichtung und/oder Strukturierung.

Fluidphobe Beschichtung und/oder Strukturierung bedeutet im Rahmen dieser Beschreibung, dass die Oberfläche derart beschichtete und/oder strukturiert ist, dass das verwendete Fluid von der Oberfläche abgestoßen wird. Darunter fallen sowohl hydrophobe, superhydrophobe, oleophobe als auch andere ein anderes Fluid als Wasser oder Öl abweisende Beschichtungen und/oder Strukturierungen. Zur Beschreibung fluidphober Beschichtungen und/oder Strukturierungen wird in der Literatur teilweise auch die Bezeichnung lyophob verwendet, siehe z. B.. Y. Yoon, D. Kim, and J.-B. Lee, Micro and Nano Systems Letters, 2014, 2(1), 1-18.

Fluidphile Beschichtung und/oder Strukturierung bedeutet im Rahmen dieser Beschreibung, dass die Oberfläche derart beschichtete und/oder strukturiert ist, dass das verwendete Fluid mit der Oberfläche stark wechselwirkt. Darunter fallen sowohl hydrophile, superhydrophile, oleophile als auch andere Beschichtungen und/oder Strukturierungen, die mit einem anderen Fluid als Wasser oder Öl stark wechselwirken. Zur Beschreibung fluidphiler Beschichtungen und/oder Strukturierungen wird in der Literatur teilweise auch die Bezeichnung lyophil verwendet, siehe z. B.. Y. Yoon, D. Kim, and J.-B. Lee, Micro and Nano Systems Letters, 2014, 2(1), 1-18.

Das abgeschlossene Volumen kann also im Bereich des Heißseitenreservoirs mit einer fluidphoben Beschichtung und/oder Strukturierung ausgebildet sein und im Bereich des Kaltseitenreservoirs ohne eine Beschichtung und/oder Strukturierung. Alternativ kann das abgeschlossene Volumen im Bereich des Kaltseitenreservoirs mit einer fluidphilen Beschichtung und/oder Strukturierung ausgebildet sein und im Bereich des Heißseitenreservoirs ohne eine besondere Beschichtung und/oder Strukturierung.

Ebenso liegt es im Rahmen der Erfindung, dass das abgeschlossene Volumen im Bereich des Heißseitenreservoirs mit einer fluidphoben Beschichtung und/oder Strukturierung und im Bereich des Kaltseitenreservoirs mit einer fluidphilen Beschichtung und/oder Strukturierung ausgebildet ist.

Die beschriebenen Varianten der Beschichtung und/oder Strukturierung führen zu einem Fluidkreislauf einer "Jumping-Drop Thermal Diode", wie in Boreyko et al., Applied Physics Letter 99 für hydrophobe und hydrophile Beschichtungen beschrieben. Verdampft das Fluid in dem abgeschlossenen Volumen und kondensiert an der fluidphoben Beschichtung im Bereich des anderen Reservoirs werden die kondensierten Tropfen des Fluids von der Beschichtung entsprechend abgestoßen, sodass diese in den fluidphilen Bereich des Herkunftsreservoirs "zurückspringen". Die Jumping-Drop Thermal Diode funktioniert unabhängig von der Lage der Diode im Raum. Zusätzlich ergibt sich der Vorteil, dass der Rücktransport des kondensierten Fluids schnell erfolgen kann.

Es kann auch eine hydrophile und/oder hydrophobe Strukturierung wie in X.-M. Li, D. Reinhoudt, and M. Crego-Calama, Chemical Society Reviews, 2007, 36(8), 1350-1368 vorgesehen sein.

Vorzugsweise weist das abgeschlossene Volumen im Bereich des Kaltseitenreservoirs eine superhydrophobe Beschichtung auf und im Bereich des Heißseitenreservoirs eine superhydrophile Beschichtung. Die Vorrichtung ist also vorzugsweise als "Jumping-Drop Thermal Diode" ausgebildet, mit einer Beschichtung bzw. Strukturierung der jeweiligen Oberfläche wie in Boreyko et al., Applied Physics Letter 99 beschrieben. In diesem Fall wird als Fluid vorzugsweise Wasser oder eine wasserbasiertes Fluid eingesetzt. Verdampft das Fluid in dem abgeschlossenen Volumen und kondensiert an der superhydrophoben Beschichtung werden die kondensierten Tropfen des Fluids von der Beschichtung entsprechend abgestoßen, sodass diese in den superhydrophilen Bereich "zurückspringen". Die Jumping-Drop Thermal Diode funktioniert unabhängig von der Lage der Diode im Raum. Zusätzlich ergibt sich der Vorteil, dass der Rücktransport des kondensierten Fluids schnell erfolgen kann.

Alternativ weist das abgeschlossene Volumen im Bereich des Heißseitenreservoirs eine oleophile Beschichtung und/oder Strukturierung auf und/oder im Bereich des Kaltseitenreservoirs eine oleophobe Beschichtung und/oder Strukturierung. In diesem Fall wird als Fluid vorzugsweise Öl oder ein ölbasiertes Fluid eingesetzt.

Die oleophile Beschichtung und/oder Strukturierung und/oder die oleophobe Beschichtung und/oder Strukturierung sind vorzugsweise wie in Y. Ohkubo, I. Tsuji, S. Onishi, and K. Ogawa, Journal of materials science, 2010, 45(18), 4963-4969 als auch L. Feng, Z. Zhang, Z. Mai, Y. Ma, B. Liu, L. Jiang, and D. Zhu, Angewandte Chemie International Edition, 2004, 43(15), 2012-2014. beschrieben ausgebildet.

In einer weiteren alternativen Ausführungsform erfolgt der Rücktransport über die Schwerkraft, indem das kondensierte Fluid an einer Oberfläche kondensiert und durch die Schwerkraft zurück in den Herkunftsbereich läuft. Dieser Prozess ist jedoch eher langsam und nicht lageunabhängig.

Das abgeschlossene Volumen ist bei beiden Ausführungsformen als eine thermische Diode ausgebildet, die den Wärmefluss auf eine Richtung einschränkt.

In einer weiteren bevorzugten Ausführungsform der Erfindung ist die Vorrichtung als Wärmepumpe ausgebildet und weist als Mittel zur Erzeugung einer mechanische Spannung in dem mechanokalorischen Material Mittel zur Zug- und/oder Druckbelastung, insbesondere ein Kolbensystem, vorzugsweise ein Zylinder-Kolben-Aggregat auf. Das mechanokalorische Material ist dabei im Inneren des Zylinders angeordnet und wird mittels des Kolbens komprimiert.

Vorzugsweise umfasst die Vorrichtung zumindest zwei Wärmeübertragereinheiten mit mechanokalorische Material, die in zwei verschiedenen Zylindern angeordnet sind. Vorzugsweise sind die Mittel zur Erzeugung einer mechanische Spannung in dem mechanokalorischen Material derart mit den beiden Wärmeübertragereinheiten zusammenwirkend angeordnet und ausgebildet, dass die beiden Wärmeübertragereinheiten alternierend belastbar sind. Dazu sind bevorzugt die zumindest zwei Wärmeübertragereinheiten mit mechanokalorischem Material jeweils in einem einseitig geschlossenen Zylinder angeordnet, wobei mittig ein Kolben zur alternierenden Kompression des mechanokalorischen Materials angeordnet ist. Dabei wird vorzugsweise die potenzielle Energie der komprimierten einen Wärmeübertragereinheit mit mechanokalorischem Material für die Kompression des mechanokalorischen Materials in dem zweiten Zylinder verwendet.

Vorzugsweise ist die Vorrichtung mit einem Exzenter ausgebildet, höchst vorzugsweise mit einer Common-Rail-Pumpe, insbesondere zur Zug- und/oder Druckbelastung des mechanokalorischen Materials.

Optional ist der Exzenter alternativ mit einem Kugellager ausgebildet, dessen Mittelpunkt außerhalb der Wellenachse der Exzenterwelle liegt. Das Kugellager steht in mittelbarer Wirkverbindung, vorliegend kraftschlüssig, mit vorzugsweise zwei Wärmeübertragereinheiten. Bei einer Rotation der Welle dreht sich das Kugellager und komprimiert jeweils alternierend die beiden Wärmeübertragereinheiten. Die Kompression erfolgt dabei innerhalb des gasdichten Volumens der Zylinder, die das mechanokalorische Material umgeben. Dabei kann das Kugellager außerhalb des Zylinders liegen und durch den Zylinder, beispw. über einen Balg, auf die Wärmeübertragereinheiten einwirken.

In einer alternativen Weiterbildung der Erfindung ist die Vorrichtung als Wärmepumpe ausgebildet und weist eine Spule mit einem vorzugsweisen magnetisierbaren Kern auf. Durch eine Bestromung der Spule wird eine Bewegung des Kerns in der Spule erzeugt. Der Kern ist vorzugsweise mit dem Kolben zur Kompression des mechanokalorischen Materials gekoppelt oder entspricht diesem. Durch die Bewegung des magnetisierbaren Kerns in der Spule erfolgt daher eine Kompression des mechanokalorischen Materials, sodass eine Temperaturänderung des mechanokalorischen Materials erzeugt wird.

Vorzugsweise umfasst die Vorrichtung auch hier zumindest zwei Wärmeübertragereinheiten mit mechanokalorischem Material, die in zwei verschiedenen Zylindern angeordnet sind. Vorzugsweise ist die Spule mit dem magnetisierbaren Kern als Mittel zur Erzeugung einer mechanische Spannung in dem mechanokalorischen Material derart mit den beiden Wärmeübertragereinheiten zusammenwirkend angeordnet und ausgebildet, dass die beiden Wärmeübertragereinheiten alternierend belastbar sind. Dazu sind die zumindest zwei Wärmeübertragereinheiten mit mechanokalorischem Material jeweils in einem einseitig geschlossenen Zylinder angeordnet, wobei mittig der magnetisierbare Kern als ein Kolben zur alternierenden Kompression des mechanokalorischen Materials angeordnet ist. Dabei wird vorzugsweise die potentielle Energie der komprimierten einen Wärmeübertragereinheit mit mechanokalorischem Material für die Kompression des mechanokalorischen Materials in dem zweiten Zylinder verwendet.

Vorzugsweise ist das mechanokalorische Material der Wärmeübertragereinheit mit einer Bienenwabenstruktur, als Stiftstruktur oder als Feder ausgebildet. Bei der Bienenwabenstruktur ergibt sich der Vorteil, dass sich die anliegenden Kräfte des mechanische Spannungsfeldes homogen in der Bienenwabenstruktur verteilen. Dies gewährt eine gleichmäßige Kraftverteilung trotz dünner Strukturen und eine Langlebigkeit des mechanokalorischen Materials. Bei der Ausgestaltung als Stiftstruktur ergibt sich der Vorteil, dass in einfacher Art und Weise eine stabile Struktur ausgebildet werden kann. Bei der Ausbildung als Feder ergibt sich der Vorteil, dass eine Federstruktur einen größeren Hub aufgrund der Kompression des mechanokalorischen Materials durch ein Kolbensystem ermöglicht. Hier wird in besonders effizienter Art und Weise die in dem mechanokalorischen Material gespeicherte potentielle Energie zurückgegeben, damit diese für eine Kompression einer weiteren Wärmeübertragereinheit mit mechanokalorischem Material genutzt werden kann.

Vorzugsweise weist das mechanokalorische Material eine Strukturierung und/oder Beschichtung auf, bevorzugt eine Nanostrukturierung und/oder eine hydrophile Beschichtung. Dies ermöglicht eine homogene Benetzung und eine gute Verteilung des Fluids.

In einer bevorzugten Ausführungsform ist das Verfahren zum Betrieb einer Wärmepumpe vorgesehen. Das Verfahren wird in dieser Ausführungsform mittels einer Wärmepumpe mit druckgesteuerten Ventilen durchgeführt und läuft vorzugsweise folgendermaßen ab:

| | |
|---|---|
| A | Kompression des mechanokalorischen Materials der Wärmeübertragereinheit. |
| | Durch die Kompression kommt es zu einem Phasenübergang in dem mechanokalorischen Material und die Temperatur des mechanokalorischen Materials erhöht sich. |
| B | Wärmeübertrag von dem mechanokalorischen Material auf das Fluid mittels latenter Wärme (Verdunstungswärme). |
| | Das umgebende Fluid erwärmt sich und verdampft. Dadurch steigt der Druck in dem Bereich der Wärmeübertragereinheit. |
| C | Öffnen des Heißseitenventils. |
| | Ab einem bestimmten Druck (Differenzdruck) öffnet das Heißseitenventil, welches die Verbindung zu dem Heißseitenreservoir steuert. Das Fluid strömt in das Heißseitenreservoir und gibt hier die gespeicherte Wärme ab. |
| | Dies führt zu einem Temperaturangleich zwischen mechanokalorischem Material und Heißseitenreservoir. |
| D | Der Kompressionsdruck auf das mechanokalorischen Material der Wärmeübertragereinheit wird weggenommen. |
| | Durch den Phasenübergang kühlt das mechanokalorische Material ab. |
| E | Wärmeübertrag von dem Fluid auf das mechanokalorische Material mittels latenter Wärme (Kondensationswärme). |
| | Das im Wesentlichen dampfförmige Fluid kondensiert auf dem mechanokalorischen Material, sodass hier ein Wärmeübertrag von dem Fluid auf das mechanokalorische Material mittels latenter Wärme erfolgt. |
| F | Öffnen des Kaltseitenventils. |
| | Durch die Kondensation des Fluids nimmt der Druck in dem Bereich der Wärmeübertragereinheit ab, dadurch öffnet sich das Kaltseitenventil, welches die Verbindung zu dem Kaltseitenreservoir steuert. |
| | Aus dem Kaltseitenreservoir verdampft nun Fluid und strömt zum mechanokalorischen Wärmeübertrager. |
| | Hierdurch kommt es zu einem Temperaturangleich zwischen mechanokalorischem Wärmeübertrager und Kaltseitenreservoir. |

Mittels dieser Ausführungsform des erfindungsgemäßen Verfahrens kann also durch zyklischen Betrieb Wärme von dem Kaltseitenreservoir zu dem Heißseitenreservoir transportiert werden.

In einer alternativen Ausführungsform ist das Verfahren zum Betrieb einer Wärmekraftmaschine vorgesehen. Das Verfahren wird in dieser Ausführungsform mittels einer Wärmekraftmaschine zur Erzeugung elektrischen Stroms mit aktiv gesteuerten Ventilen durchgeführt und läuft vorzugsweise folgendermaßen ab:

| | |
|---|---|
| A | Öffnen des Heißseitenventils. |
| | Das Fluid strömt von dem Heißseitenreservoir in den Bereich der Wärmeübertragereinheit mit dem mechanokalorischen Material. |
| B | Wärmeübertrag von dem Fluid auf das mechanokalorische Material mittels latenter Wärme (Kondensationswärme); |
| | Das im Wesentlichen dampfförmige Fluid kondensiert auf dem mechanokalorischen Material, sodass hier ein Wärmeübertrag mittels latenter Wärme erfolgt und sich das mechanokalorische Material erwärmt. |
| | Aufgrund der Temperaturänderung kommt es zu einer Volumen- und/oder Formänderung des mechanokalorischen Materials der Wärmeübertragereinheit. |
| C | Bewegung des Kolben, welcher als magnetisierbarer Kern in der Spule angeordnet ist und in Wirkverbindung mit dem mechanokalorischen Material steht. |
| | Der Kolben wird bei einer Volumen- und/oder Formänderung des mechanokalorischen Materials bewegt und aus dem Zylinder, der das mechanokalorische Material umgibt, herausgedrückt. |
| D | Induktion eines Stroms in der Spule. |
| | Durch die Bewegung des magnetisierbaren Kerns in der Spule wird in der Spule ein elektrischer Strom induziert. |
| E | Öffnen des Kaltseitenventil. |
| | Durch ein Öffnen des Kaltseitenventils sinkt der Druck in dem Bereich der Wärmeübertragereinheit, das Fluid verdampft und strömt in das Kaltseitenreservoir. |
| F | Wärmeübertrag von dem mechanokalorischen Material auf das Fluid mittels latenter Wärme (Verdunstungswärme). |
| | Dabei erfolgt ein Wärmeübertrag von dem mechanokalorischen Material auf das Fluid durch die Verdunstungswärme. Eine weitere Volumen- und/oder Formänderung des mechanokalorischen Materials erfolgt. |
| G | Bewegung des Kolben in die entgegengesetzte Richtung. |
| | Der Kolben wird bei einer Volumen- und/oder Formänderung des mechanokalorischen Materials bewegt und in den Zylinder, der das mechanokalorische Material umgibt hereingezogen. |
| D | Induktion eines Stroms in der Spule. |
| | Durch die Bewegung des magnetisierbaren Kerns in der Spule wird in der Spule ein elektrischer Strom induziert. |

Das Verfahren kann beginnend mit dem Verfahrensschritt A widerholt werden.

Mittels dieser Ausführungsform des erfindungsgemäßen Verfahrens kann also aus der Wärme des Heißseitenreservoirs elektrischer Strom erzeugt werden.

Das erfindungsgemäße Verfahren und die erfindungsgemäße Vorrichtung sind grundsätzlich für Anwendungen geeignet, bei denen Umwandlung von Wärme in Arbeit oder elektrischen Strom oder das Heizen und/oder Kühlen durch Einsatz von Arbeit erfolgen soll.

Das erfindungsgemäße Verfahren und die erfindungsgemäße Vorrichtung sind daher vorzugsweise als Wärmekraftmaschinen und/oder Wärmepumpen ausgebildet oder werden in Wärmekraftmaschinen und/oder Wärmepumpen eingesetzt. Alternativ ist auch ein Einsatz als Aktor möglich.

Weitere bevorzugte Merkmale und Ausführungsformen des erfindungsgemäßen Verfahrens und der erfindungsgemäßen Vorrichtung werden im Folgenden anhand von Ausführungsbeispielen und den Figuren erläutert. Dabei zeigt:
- Figur 1: eine schematische Darstellung eines ersten Ausführungsbeispiels einer erfindungsgemäßen Vorrichtung als eine Wärmepumpe;
- Figur 2: eine schematische Darstellung eines zweiten Ausführungsbeispiels einer erfindungsgemäßen Vorrichtung als eine Wärmepumpe;
- Figur 3: eine schematische Darstellung eines dritten Ausführungsbeispiels einer erfindungsgemäßen Vorrichtung als eine Wärmekraftmaschine;
- Figur 4: mit den Teilabbildungen a, b und c eine schematische Darstellung der Fluidrückführung;
- Figur 5: mit den Teilabbildungen a, b und c eine schematische Darstellung des mechanokalorischen Materials.

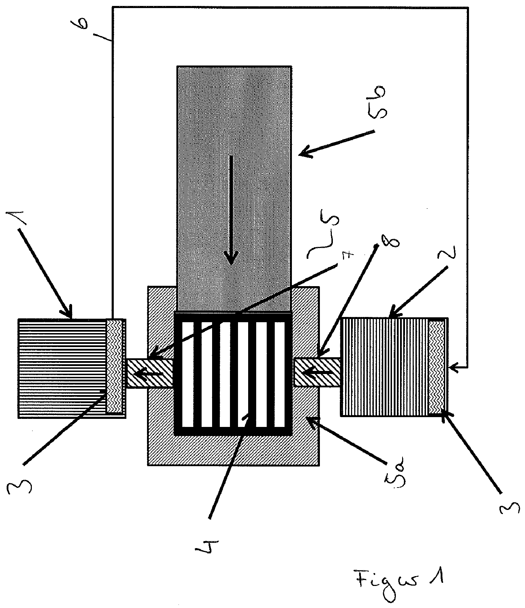

In den Figuren 1 bis 5 bezeichnen gleiche Bezugszeichen gleiche oder gleichwirkende Elemente.

Figur 1 zeigt als ein erstes Ausführungsbeispiel einer erfindungsgemäßen Vorrichtung eine schematische Darstellung einer Wärmepumpe.

Die Vorrichtung ist vorliegend als Wärmepumpe ausgebildet und ist mit einem Heißseitenreservoir 1 und einem Kaltseitenreservoir 2 für ein Fluid 3 ausgebildet. Vorliegend wird Wasser als Fluid 3 verwendet. Das Heißseitenreservoir 1 weist vorliegend eine Temperatur von 150°C sowie einen herrschenden Druck von 4,7 bar auf. Das Kaltseitenreservoir 1 weist vorliegend eine Temperatur von 20°C sowie einen herrschenden Druck von 0,023 bar auf.

Zwischen Heißseitenreservoir 1 und Kaltseitenreservoir 2 ist eine Wärmeübertragereinheit 4 mit mechanokalorischem Material angeordnet. Vorliegend ist das mechanokalorische Material 4 eine Nickel-Titan-Legierung.

Die Wärmepumpe weist vorliegend einen Fluidkreislauf für das Fluid 3 auf. Dazu ist zwischen Heißseitenreservoir 1 und Kaltseitenreservoir 2 eine Fluidrückführung 6 angeordnet. Der Fluidkreislauf umfasst somit Heißseitenreservoir 1, Kaltseitenreservoir 2, Heißseitenventil, Kaltseitenventil, den Bereich der Wärmeübertragereinheit 4 und die Fluidrückführung 6. Der Fluidkreislauf ist als druckdichtes System ausgebildet, indem im Wesentlichen aus dem druckdichten System alle Fremdgase (das heißt alle Gase mit Ausnahme des Fluids 3) entfernt sind.

In dem Fluidkreislauf ist zwischen dem Bereich der Wärmeübertragereinheit 4 und dem Heißseitenreservoir 1 ein Heißseitenventil 7 angeordnet und zwischen dem Bereich der Wärmeübertragereinheit 4 und dem Kaltseitenreservoir 2 ein Kaltseitenventil 8. Vorliegend sind das Heißseitenventil 7 und das Kaltseitenventil 8 als druckgesteuerte Ventile ausgebildet. Der jeweilige Differenzdruck bei dem die beiden Ventile öffnen ist einstellbar und liegt vorliegend bei 10 mbar.

Die Wärmepumpe weist als Mittel zur Erzeugung einer mechanische Spannung in dem mechanokalorischen Material vorliegend Mittel zur Zug- oder Druckbelastung des mechanokalorischen Materials durch ein Kolbensystem 5 auf. Das Kolbensystem 5 umfasst einen Zylinder 5a, in dem das mechanokalorische Material 4 angeordnet ist, und einen Kolben 5b und ist vorliegend mit einem Exzenter zur Kompression des mechanokalorischen Materials ausgebildet. Die maximale Druckbeaufschlagung liegt vorliegend bei 500 MPa.

Das mechanokalorische Material der Wärmeübertragereinheit 4 ist in Wirkverbindung mit dem Fluid 3 angeordnet, sodass Wärme zwischen Fluid 3 und mechanokalorischem Material übertragbar ist. Dazu durchströmt das Fluid das mechanokalorische Material der Wärmeübertragereinheit 4. Das druckdichte System ist über die Temperatur des Heißseitenreservoirs 1, die Temperatur des Kaltseitenreservoirs 2 sowie den herrschenden Druck des Fluids 3 derart ausgebildet, dass der Wärmeübertrag von dem Fluid 3 auf das mechanokalorische Material der Wärmeübertragereinheit 4 mittels latenter Wärme erfolgt.

Bei Betrieb der Wärmepumpe werden folgende Verfahrensschritte widerholt durchlaufen:

| | |
|---|---|
| A | Kompression des mechanokalorischen Materials der Wärmeübertragereinheit 4 mittels des Kolbensystems 5. |
| | Der Kolben 5b wird mittels des Exzenters in den Zylinder 5a bewegt. Dadurch wird das mechanokalorische Material der Wärmeübertragereinheit 4 komprimiert. Durch die Kompression kommt es zu einem Phasenübergang in dem mechanokalorischen Material und die Temperatur des mechanokalorischen Materials erhöht sich. |
| B | Wärmeübertrag von dem mechanokalorischen Material auf das Fluid 3 mittels latenter Wärme (Verdunstungswärme). |
| | Das umgebende Fluid 3 erwärmt sich durch den Kontakt mit dem mechanokalorischen Material der Wärmeübertragereinheit 4 und verdampft. Dadurch steigt der Druck in dem Bereich der Wärmeübertragereinheit 4. |
| C | Öffnen des Heißseitenventils 7. |
| | Übersteigt der Druck in dem Bereich der Wärmeübertragereinheit 4 den Differenzdruck des Heißseitenventils öffnet das Heißseitenventil 7, welches die Verbindung zu dem Heißseitenreservoir 1 steuert. Das gasförmige Fluid 3 strömt in das Heißseitenreservoir 1 und gibt hier die gespeicherte Wärme ab. |
| | Alternativ kann auch eine aktive Steuerung der Ventile erfolgen. |
| | Durch den Wärmeübertrag an das Fluid 3 hat das mechanokalorische Material Umgebungstemperatur angenommen. |
| D | Der Kompressionsdruck auf das mechanokalorischen Material der Wärmeübertragereinheit 4 wird weggenommen. |
| | Der Kolben 5b wird mittels des Exzenters aus dem Zylinder 5a heraus bewegt. Dadurch kommt es zu dem umgekehrten Phasenübergang in dem |
| | mechanokalorischen Material und die Temperatur des mechanokalorischen Materials nimmt ab. |
| E | Wärmeübertrag von dem Fluid 3 auf das mechanokalorische Material mittels latenter Wärme (Kondensationswärme). |
| | Das im Wesentlichen dampfförmige Fluid 3 in dem Bereich der Wärmeübertragereinheit 4 kondensiert auf dem mechanokalorischen Material, sodass hier ein Wärmeübertrag mittels latenter Wärme erfolgt. |
| F | Öffnen des Kaltseitenventils. |
| | Durch die Kondensation des Fluids 3 nimmt der Druck in dem Bereich der Wärmeübertragereinheit 4 ab. Sinkt der Druck in dem Bereich der Wärmeübertragereinheit 4 unter den Differenzdruck des Kaltseitenventils öffnet sich das Kaltseitenventil 8, welches die Verbindung zu dem Kaltseitenreservoir 2 steuert. |
| | Aus dem Kaltseitenreservoir 2 strömt neues, kaltes Fluid 3 nach, welches dann in einem weiteren Zyklus erwärmt und zu dem Heißseitenreservoir 1 transportiert werden kann. |

Über die Fluidrückführung 6 wird das Fluid 3 von dem Heißseitenreservoir 1 zurück zum Kaltseitenreservoir 2 transportiert. Zur Aufrechterhaltung der Druckdifferenz zwischen Heißseitenreservoir 1 und Kaltseitenreservoir 2 ist in die Fluidrückführung 6 eine Drossel (nicht dargestellt) eingebaut, analog zu klassischen Wärmepumpen basierend auf Verdichtern. Diese Drossel gewährleistet einen Druckabfall von 4,7 bar bei ausreichendem Fluidstrom von > 1 g/s für eine Wärmepumpleistung von 2 kW.

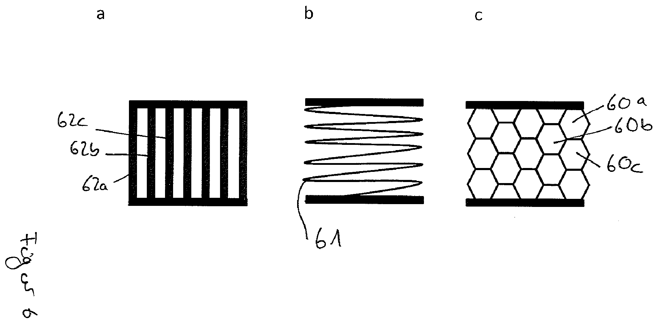

Die schematische Darstellung der Figur 1 soll im Folgenden anhand einer weiteren alternativen konkreten Realisierung einer Klimatisierungseinrichtung weiter beschrieben werden. Hierzu wird als Wärmeübertragereinheit das mechanokalorische Material Nitinol 4 als Hohlstäbe (vgl. Figur 6a) in einen gasdichten (druckdichten) Zylinder 5a integriert.

Die Hohlstäbe befinden sich dabei parallel zueinander in senkrechter Ausrichtung in dem gasdichten Zylinder 5a. Auf den Zylinder 5a kann mittels einer hydraulischen Presse eine Kraft *̅F̅*̅ ausgeübt werden, welche zu einer Druckbeaufschlagung der Hohlstäbe 4 führt, vorliegend von bis zu 750 MPa. Hierdurch werden die Hohlstäbe erwärmt bzw. bei Entfernen der Kraft entsprechend wieder abgekühlt.

Im gasdichten Zylinder 5a sind zwei Überdruckventile 7, 8 eingelassen, welche die Hohlstäbe aus mechanokalorischem Material 4 von Heißseitenreservoir 1 und Kaltseitenreservoir 2 trennen. In dem System aus Heißseitenreservoir 1, Kaltseitenreservoir 2 und Zylinder 5a sind alle Restgase mit Ausnahme des Fluids, vorliegend Ethanol, evakuiert.

Der gasdichte Zylinder 5a ist über das Kaltseitenventil 8 mit dem Kaltseitenreservoir 2 verbunden. Das Kaltseitenventil 8 ist als ein passives Überdruckventil ausgestaltet, welches sich in Vorwärtsrichtung schon bei geringen Druckdifferenzen << 1 mbar öffnet, wohingegen es in Rückwärtsrichtung einen Fluidstrom verhindert. In gleicher Weise befindet sich ein Überdruckventil 8 in der Verbindung zum Heißseitenreservoir 1.

Durch Anlegen einer externen Kraft auf den gasdichten Zylinder 5a erwärmen sich die Hohlstäbe 4 und das auf diesen Hohlstäben in flüssiger Form vorliegende Fluid verdampft. Das Überdruckventil 7 in Richtung Heißseite öffnet sich und durch das Verdampfen des Fluids wird mittels latentem Wärmeübertrag thermische Energie von den Hohlstäben aus mechanokalorischem Material 4 zum Heißseitenreservoir 1 übertragen.

Bei Entfernen der externen Kraft kühlen die Hohlstäbe 4 ab. Dadurch kondensiert gasförmiges Fluid an den Hohlstäben, der Dampfdruck in dem gasdichten Zylinder 5a sinkt. Dies führt zum Öffnen des Überdruckventils 8 in Richtung des Kaltseitenreservoirs 2. In diesem Stadium des Prozesses ist die Temperatur in dem gasdichten Zylinder 2a mit den Hohlstäben aus mechanokalorischem Material 4 kleiner als im Kaltseitenreservoir 2. Das Fluid 3 dem Kaltseitenreservoir 2 verdampft, wodurch das Kaltseitenreservoir abkühlt.

Mit jedem weiteren Zyklus wird thermische Energie mittels latenten Wärmeübertrags zwischen Hohlstäben und Fluid ausgetauscht, sodass es zu einem Wärmetransport von der Kaltseite zur Heißseite kommt. Durch zyklisches Wiederholen dieses Prozesses wird nun immer mehr thermische Energie von dem Kaltseitenreservoir in das Heißseitenreservoir transportiert. Je schneller dieser Prozess wiederholt wird, d.h. je höher die Zyklusfrequenz ist, desto größer ist die effektive Kühlleistung.

Bei der Verwendung von 18 Hohlstäben aus Nitinol (Ni55/Ti45) mit einem Außendurchmesser von 2.4 mm, einer Wandstärke von 0,5 mm und 10 mm Länge wird bei einer Druckbeaufschlagung von 700 MPa mit einer Zyklusfrequenz von 0,25 Hz eine Temperaturdifferenz zwischen Heißseitenreservoir und Kaltseitenreservoir von ca. 15 Grad erreicht. Dies entspricht beispielsweise einer Temperatur des Heißseitenreservoirs von ca. 35 Grad (Druck 137 mbar) und einer Temperatur des Kaltseitenreservoirs von ca. 20 Grad (Druck 58 mbar). In diesem Temperaturbereich ist der Einsatz als Klimaanlage oder ähnliches möglich.

Die beschriebene Wärmepumpe kann mit der im Wesentlichen identischen Vorrichtung auch als Wärmekraftmaschine betrieben werden. Dazu müssen Heiß- und Kaltseitenreservoir in ihrer Funktionalität vertauscht werden. Die Steuerung der Ventile erfolgt dann aktiv.

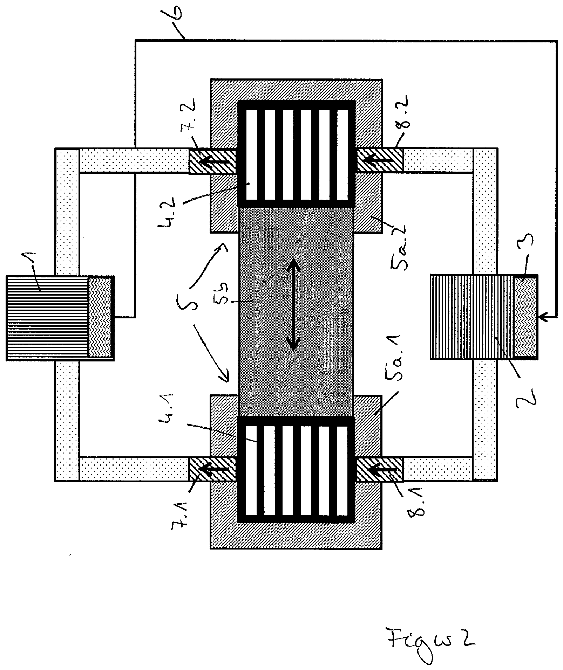

Figur 2 zeigt als ein zweites Ausführungsbeispiel einer erfindungsgemäßen Vorrichtung eine schematische Darstellung einer Wärmepumpe.

Um Wiederholungen zu vermeiden soll im Folgenden lediglich auf die Unterschiede zwischen den Figuren eingegangen werden.

Die Vorrichtung ist vorliegend als Wärmepumpe ausgebildet und ist mit einem Heißseitenreservoir 1 und einem Kaltseitenreservoir 2 für ein Fluid 3 ausgebildet. Zwischen Heißseitenreservoir 1 und Kaltseitenreservoir 2 sind vorliegend zwei Wärmeübertragereinheiten 4.1, 4.2 mit mechanokalorischem Material angeordnet. Die Wärmeübertragereinheiten 4.1, 4.2 sind so in dem Fluidkreislauf angeordnet, dass sie getrennt von dem Fluid 3 durchströmt werden, analog zu einer Parallelschaltung von Widerständen in einem Stromkreislauf.

In dem Fluidkreislauf ist zwischen der ersten Wärmeübertragereinheit 4.1 und dem Heißseitenreservoir 1 ein Heißseitenventil 7.1 angeordnet und zwischen der ersten Wärmeübertragereinheit 4.1 und dem Kaltseitenreservoir 2 ein Kaltseitenventil 8.1. Ebenso ist in dem Fluidkreislauf zwischen der zweiten Wärmeübertragereinheit 4.2 und dem Heißseitenreservoir 1 ein Heißseitenventil 7.2 angeordnet und zwischen der zweiten Wärmeübertragereinheit 4.2 und dem Kaltseitenreservoir 2 ein Kaltseitenventil 8.2. Vorliegend sind die Heißseitenventile 7.1, 7.2 und die Kaltseitenventile 8.1, 8.2 als druckgesteuerte Ventile ausgebildet.

Die Wärmepumpe weist als Mittel zur Zug- und/oder Druckbelastung des mechanokalorischen Materials ein Kolbensystem 5 auf. Das Kolbensystem 5 umfasst einen Kolben 5b und ist vorliegend als Exzenter zur Kompression des mechanokalorischen Materials ausgebildet. Als Gegenstücke sind zwei Zylinder 5a.1, 5a.2 vorgesehen, in denen jeweils das mechanokalorische Material 4.1, 4.2 angeordnet ist.

Zur Kompression des mechanokalorischen Materials wir der Kolben zwischen den Zylindern 5a.1, 5a.2 hin und her bewegt. Die zwei Wärmeübertragereinheiten 4.1, 4.2 mit mechanokalorischem Material werden somit abwechselnd komprimiert. Dabei wird die in der Kompression des mechanokalorischen Materials der ersten Wärmeübertragereinheit 4.1 enthaltene potentielle Energie zur Kompression des mechanokalorischen Materials der zweiten Wärmeübertragereinheit 4.2 verwendet und umgekehrt.

Optional ist der Exzenter mit einem Kugellager (anstelle des Kolbens 5b) ausgebildet, dessen Mittelpunkt außerhalb der Wellenachse der Exzenterwelle (nicht dargestellt) liegt. Das Kugellager steht in mittelbarer Wirkverbindung, vorliegend kraftschlüssig, mit den beiden Wärmeübertragereinheiten 4.1 und 4.2. Bei einer Rotation der Welle dreht sich das Kugellager und komprimiert jeweils alternierend die beiden Wärmeübertragereinheiten 4.1 und 4.2. Die Kompression erfolgt dabei innerhalb des gasdichten Volumens der Zylinder 5a.1 und 5a.2. Dabei liegt das Kugellager zwischen den Zylindern 5a.1 und 5a.2 und kann durch den Zylinder, beispw. über einen Balg, auf die Wärmeübertragereinheiten 4.1 und 4.2 einwirken.

Die zwei Wärmeübertragereinheiten 4.1, 4.2 mit mechanokalorischem Material durchlaufen somit beide das zu Figur 1 beschriebene Verfahren, jedoch zeitversetzt.

Das Öffnen und Schließen der Ventile 7.1, 7.2, 8.1, 8.2 wird, analog zu Figur 1 beschrieben, über die herrschenden Druckverhältnisse gesteuert. Dadurch kann auf aktive Pumpen für das Fluid 3 verzichtet werden.

Die beschriebene Wärmepumpe kann mit der im Wesentlichen identischen Vorrichtung auch als Wärmekraftmaschine betrieben werden, also mit dem umgekehrten Kreisprozess. Dazu müssen Heiß- und Kaltseitenreservoir in ihrer Funktionalität vertauscht werden. Die Steuerung der Ventile erfolgt dann aktiv. Durch die alternierende Temperaturänderung der zwei Wärmeübertragereinheiten 4.1, 4.2 mit mechanokalorischen Materialien dehnen sich die Wärmeübertragereinheiten 4.1, 4.2 abwechselnd aus, sodass der Kolben 5b hin und her bewegt wird. Diese Bewegung kann als mechanische Arbeit genutzt werden.

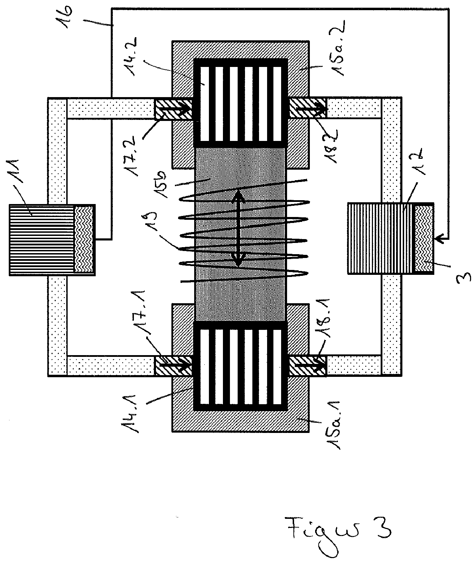

Figur 3 zeigt eine schematische Darstellung eines dritten Ausführungsbeispiels einer erfindungsgemäßen Vorrichtung, betreibbar als eine Wärmekraftmaschine oder eine Wärmepumpe.

Die Vorrichtung ist vorliegend als Wärmekraftmaschine ausgebildet und ist mit einem Heißseitenreservoir 11 und einem Kaltseitenreservoir 12 für ein Fluid 3 ausgebildet. Zwischen Heißseitenreservoir 11 und Kaltseitenreservoir 12 sind vorliegend zwei Wärmeübertragereinheiten 14.1, 14.2 mit mechanokalorischem Material angeordnet. Die Wärmeübertragereinheiten 14.1, 14.2 sind so in dem Fluidkreislauf angeordnet, dass sie getrennt von dem Fluid 3 durchströmt werden, analog zu einer Parallelschaltung von Widerständen in einem Stromkreislauf. Zwischen Heißseitenreservoir 11 und Kaltseitenreservoir 12 verläuft eine Fluidrückführung 16. Diese ist vorliegend als ein mit einem Docht ausgefülltes Rohr ausgebildet.

In dem Fluidkreislauf ist zwischen der ersten Wärmeübertragereinheit 14.1 und dem Heißseitenreservoir 11 ein Heißseitenventil 17.1 angeordnet und zwischen der ersten Wärmeübertragereinheit 14.1 und dem Kaltseitenreservoir 12 ein Kaltseitenventil 18.1. Ebenso ist in dem Fluidkreislauf zwischen der zweiten Wärmeübertragereinheit 14.2 und dem Heißseitenreservoir 11 ein Heißseitenventil 17.2 angeordnet und zwischen der zweiten Wärmeübertragereinheit 14.2 und dem Kaltseitenreservoir 12 ein Kaltseitenventil 18.2. Vorliegend sind die Ventile 17.1 , 17.2, 18.1, 18.2 als aktiv gesteuerte Ventile ausgebildet.

Die Wärmekraftmaschine weist als Mittel zur Induktion eines Stroms aus Bewegung eine Spule 19 mit einem magnetisierbaren Kern 15b auf. Der magnetisierbare Kern 15b der Spule 19 ist als Kolben ausgebildet. Als Gegenstücke sind zwei Zylinder 15a.1, 15a.2 vorgesehen, in denen jeweils das mechanokalorische Material 14.1, 14.2 angeordnet ist. Der magnetisierbare Kern 15b der Spule 19 steht daher in Wirkverbindung mit dem mechanokalorischen Material der beiden Wärmeübertragereinheiten 14.1, 14.2. Daher wird durch eine Temperaturänderung des mechanokalorischen Materials einer der beiden Wärmeübertragereinheiten 14.1, 14.2 eine Bewegung des Kerns 15b in der Spule 19 erzeugt. Durch die Bewegung des Kerns 15b in der Spule 19 wird ein elektrischer Strom in der Spule induziert.

Wird das erste Heißseitenventil 17.1 geöffnet, strömt das im Heißseitenreservoir 11 in der Gasphase befindliche Fluid 3 in den Bereich der ersten Wärmeübertragereinheit 14.1 mit dem mechanokalorischen Material. Dort kondensiert das Fluid 3 auf dem mechanokalorischen Material und erwärmt somit das mechanokalorische Material. Aufgrund der Temperaturänderung erfolgt in dem mechanokalorischen Material ein Phasenübergang und das mechanokalorische Material dehnt sich aus. Da das mechanokalorische Material in Wirkverbindung mit dem magnetisierbaren Kern 15b in der Spule 19 steht, wird dieser aus dem Zylinder 15a.1 heraus gedrückt.

Wird dann das Heißseitenventil 17.1 geschlossen und das Kaltseitenventil 18.1 geöffnet, sinkt der Druck im Bereich des mechanokalorischen Materials und das kondensierte Fluid verdampft und führt mittels latenten Wärmeübertrags Verdampfungswärme von dem mechanokalorischen Material ab, so dass dieses abkühlt. Aufgrund der Temperaturänderung erfolgt in dem mechanokalorischen Material der umgekehrte Phasenübergang und das mechanokalorische Material zieht sich zusammen.

Gleichzeitig kann das zweite Heißseitenventil 17.1 geöffnet werden. Damit strömt das im Heißseitenreservoir 11 in der Gasphase befindliche Fluid 3 in den Bereich der zweiten Wärmeübertragereinheit 14.2 mit dem mechanokalorischen Material. Dort kondensiert das Fluid 3 auf dem mechanokalorischen Material und erwärmt somit das mechanokalorische Material. Aufgrund der Temperaturänderung erfolgt in dem mechanokalorischen Material ein Phasenübergang und das mechanokalorische Material dehnt sich aus. Da das mechanokalorische Material in Wirkverbindung mit dem magnetisierbaren Kern 15b in der Spule 19 steht, wird dieser aus dem Zylinder 15a.2 heraus gedrückt.

Diese beiden Effekte sind gleichgerichtet und sorgen für eine Rückbewegung des magnetisierbaren Kerns 15b in der Spule 19.

Durch die alternierende Temperaturänderung der zwei Wärmeübertragereinheiten 14.1, 14.2 mit mechanokalorischen Materialien dehnen sich die Wärmeübertragereinheiten 14.1, 14.2 abwechselnd aus, sodass der magnetisierbarer Kern 15b in der Spule 19 hin und her bewegt wird. Durch diese Bewegung wird ein Wechselstrom induziert.

Über die Fluidrückführung 16 wird das Fluid 3 von dem Kaltseitenreservoir 12 zurück zum Heißseitenreservoir 11 transportiert.

Die zu Figur 3 beschriebene Vorrichtung kann ebenso als Wärmepumpe betrieben werden, also mit dem umgekehrten Kreisprozess. Durch eine Bestromung der Spule 19 wird eine Bewegung des magnetisierbaren Kerns 15b in der Spule erzeugt. Durch die Bewegung des magnetisierbaren Kerns 15b in der Spule erfolgt daher eine Kompression des mechanokalorischen Materials und somit eine Temperaturänderung der zwei Wärmeübertragereinheiten 14.1, 14.2, sodass eine Temperaturänderung des mechanokalorischen Materials erzeugt wird.

Diese Temperaturänderungen können wie zu Figur 1 und 2 beschrieben jeweils mittels latenten Wärmeübetrags an das Fluids 3 übertragen werden. Die Wärme kann dann mittels des Fluids 3 in das Heißseitenreservoir abgeführt werden.

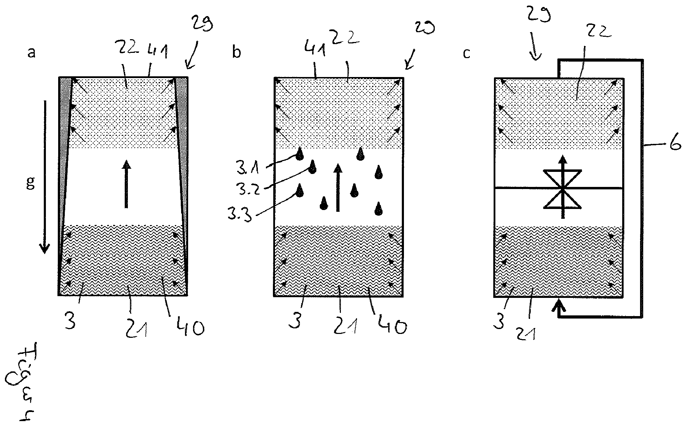

Figur 4 zeigt mit den Teilabbildungen a, b und c eine schematische Darstellung dreier Ausschnitte von Ausführungsbeispielen, insbesondere für die Realisierung des unidirektionalen Wärmetransportes mittels latenter Wärme (analog zu einer thermischen Diode) mit einer entsprechenden Fluidrückführung.

Vorliegend sind das Heißseitenreservoir 21, das Kaltseitenreservoir 22 und das mechanokalorische Material in einem gemeinsamen abgeschlossenen Volumen 29 für das Fluid 3 angeordnet. Das Kaltseitenreservoir 22 ist in einem Bereich des Volumens 29 angeordnet und das Heißseitenreservoir 21 ist in einem gegenüberliegenden Bereich des Volumens 29. Zwischen diesen Bereichen ist das mechanokalorische Material der Wärmeübertragereinheit (nicht dargestellt) angeordnet. Dies bedeutet, dass zwischen Kaltseitenreservoir 22 und Heißseitenreservoir 21 lediglich die Wärmeübertragereinheit und keine weitere physische Trennung vorhanden ist. Dabei kann das Fluid 3 das mechanokalorische Material der Wärmeübertragereinheit ungehindert durchströmen. Eine Steuerung des Fluidtransports erfolgt über die Randbedingungen wie Druck, Temperatur und Schwerkraft.

Das abgeschlossene Volumen ist bei allen drei Ausführungsformen als eine thermische Diode ausgebildet, die den Wärmefluss auf eine Richtung einschränkt.

In Figur 4a ist eine erste Variante dargestellt. Der Rücktransport des Fluids erfolgt vorliegend über die Schwerkraft, dargestellt durch den Pfeil g, indem das kondensierte Fluid 3 an einer Oberfläche des anderen Reservoirs 41 kondensiert und durch die Schwerkraft g zurück in das Herkunftsreservoir läuft 40.

Somit erfolgt ein Rücktransport des kondensierten Fluids 3, um ein Austrocknen des Herkunftsreservoirs 40 des Fluids 3 zu verhindern. Dieser Prozess ist jedoch eher langsam und nicht lageunabhängig.

In Figur 4b ist eine zweite Variante dargestellt. Vorliegend weist das abgeschlossene Volumen 29 im Bereich des Herkunftsreservoirs 40 eine superhydrophile Beschichtung auf und im Bereich des anderen Reservoirs 41 eine superhydrophobe Beschichtung. Die Vorrichtung ist also analog zu einer "Jumping-Drop Thermal Diode" ausgebildet, wie in Boreyko et al., Applied Physics Letter 99 beschrieben.

Verdampft das Fluid in dem abgeschlossenen Volumen und kondensiert an der superhydrophoben Beschichtung im Bereich des anderen Reservoirs 41 werden die kondensierten Tropfen, beispielhaft gekennzeichnet 3.1, 3.2, 3.3, des Fluids 3 von der Beschichtung entsprechend abgestoßen, sodass diese in den superhydrophilen Bereich des Herkunftsreservoirs 40 "zurückspringen". Vorliegend ist das Herkunftsreservoir 40 das Heißseitenreservoir 21 und das andere Reservoir 41 Die Jumping-Drop Thermal Diode funktioniert unabhängig von der Lage der Diode im Raum. Zusätzlich ergibt sich der Vorteil, dass der Rücktransport des kondensierten Fluids 3 schnell erfolgen kann.

In Figur 4c sind die zu den Figuren 1 bis 3 beschriebenen Ausführungsbeispielen mit Ventil-Steuerung und externer Fluidrückführung 6 schematisch dargestellt.

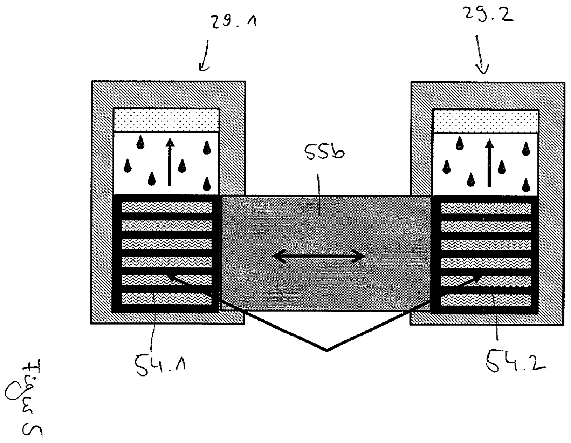

Figur 5 zeigt eine schematische Darstellung der in Figur 4b beschriebenen Variante als Jumping-Drop Thermal Diode für die Realisierung des unidirektionalen Wärmetransportes mittels latenter Wärme und die Fluidrückführung. Zusätzlich dargestellt ist das mechanokalorische Material zweier Wärmeübertragereinheiten 54.1, 54.2 in dem jeweiligen abgeschlossenen Volumen 29.1, 29.2. Zwischen den zweie Wärmeübertragereinheiten 54.1, 54.2 ist ein Kolben 55b vorgesehen, der jeweils in Wirkverbindung mit dem mechanokalorischen Material der zweie Wärmeübertragereinheit 54.1, 54.2 steht.

Zur Kompression des mechanokalorischen Materials wird der Kolben 55b hin und her bewegt, gekennzeichnet durch den Doppelpfeil. Die zwei Wärmeübertragereinheiten 54.1, 54.2 mit mechanokalorischem Material werden somit abwechselnd komprimiert.

Die zwei Wärmeübertragereinheiten 54.1, 54.2 mit mechanokalorischem Material durchlaufen somit beide das zu den Figuren 1 und 2 beschriebene Verfahren. Der Wärmetransport sowie die Rückführung des Fluids erfolgt wie in Figur 4b beschrieben.

Figur 6 zeigt mit den Teilabbildungen a, b und c eine schematische Darstellung von verschiedenen Ausführungsformen des mechanokalorischen Materials.

Figur 6a zeigt das mechanokalorische Material mit einer Stiftstruktur. Bei der Ausgestaltung als Stiftstruktur, vorliegend mit mehreren parallelen Stiften, beispielhaft gekennzeichnet 62a, 62b, 62c, ergibt sich der Vorteil, dass in einfacher Art und Weise eine stabile Struktur mit einer großen Oberfläche für den Wärmeübertrag ausgebildet werden kann.

Figur 6b zeigt das mechanokalorische Material als Feder 61 ausgebildet. Die Federstruktur ermöglicht einen größeren Hub aufgrund der Kompression des mechanokalorischen Materials durch ein Kolbensystem. Dabei wird die Feder zusammengepresst und speichert die potentielle Energie aus der Kompression. Hier kann in besonders effizienter Art und Weise die in dem mechanokalorischen Material gespeicherte potenzielle Energie zurückgegeben werden, damit diese für eine Kompression einer weiteren Wärmeübertragereinheit mit mechanokalorischem Material genutzt werden kann.

Figur 6c zeigt das mechanokalorische Material mit einer Bienenwabenstruktur. Die einzelnen Waben, beispielhaft gekennzeichnet 60a, 60b, 60c, der Bienenwabenstruktur sind vorliegend regelmäßig als Sechsecke geformt. Die anliegenden Kräfte des mechanische Spannungsfeld bei der Druck- oder Zugbelastung verteilen sich homogen in der Bienenwabenstruktur. Dies gewährt eine gleichmäßige Kraftverteilung und damit eine Langlebigkeit des mechanokalorischen Materials. Durch die gleichmäßige Kraftverteilung ist es möglich dünne Strukturen, insbesondere Zwischenwände zwischen den einzelnen Waben, auszubilden. Dadurch ist ein guter Wärmetransport in dem Material gewährleistet.

## Patentansprüche

1. Verfahren zum zyklischen Betrieb kreisprozessbasierter Systeme mit einem Heißseitenreservoir (1, 11, 21) und einem Kaltseitenreservoir (2, 12, 22) für ein Fluid (3) und zumindest einer Wärmeübertragereinheit (4) mit mechanokalorischem Material, wobei das mechanokalorische Material der Wärmeübertragereinheit (4) in Wirkverbindung mit dem Fluid (3) angeordnet ist, sodass ein Wärmeübertrag zwischen mechanokalorischem Material und Fluid (3) stattfindet, und dass eine Volumen- und/oder Formänderung des mechanokalorischen Materials durch eine mechanische Spannung in dem mechanokalorischen Material oder durch einen Wärmeübertrag zwischen dem mechanokalorischen Material und dem Fluid erzeugt wird,
**dadurch gekennzeichnet,**
**dass** der Wärmeübertrag zwischen mechanokalorischem Material und Fluid (3) im Wesentlichen mittels latenten Wärmeübertrags in Form von Verdampfungs- und Kondensationswärme des Fluids erfolgt.

2. Verfahren nach Anspruch 1,
**dadurch gekennzeichnet,**
**dass** die Formänderung des mechanokalorischen Materials die durch eine mechanische Spannung in dem mechanokalorischen Material erzeugt wird, vorzugsweise durch eine Zug- und/oder Druckbelastung des mechanokalorischen Materials, eine Scherung und/oder eine Kompression des mechanokalorischen Materials, höchstvorzugsweise über ein Kolbensystem (5), wobei durch die Zug- und/oder Druckbelastung des mechanokalorischen Materials eine Temperaturänderung des mechanokalorischen Materials erzeugt wird.

3. Verfahren nach einem der vorangegangenen Ansprüche,
**dadurch gekennzeichnet,**
**dass** ein Transport des Fluids (3) von dem oder zu dem Heißseitenreservoir (1, 11, 21) durch ein Öffnen eines Heißseitenventils (7, 17) zwischen mechanokalorischem Material und Heißseitenreservoir (1, 11, 21) gesteuert wird und dass ein Transport des Fluids (3) von dem oder zu dem Kaltseitenreservoir (2, 12, 22) durch ein Öffnen eines Kaltseitenventils (8) zwischen mechanokalorischem Material und Kaltseitenreservoir (2, 12, 22) gesteuert wird.

4. Verfahren nach einem der vorangegangenen Ansprüche,
**dadurch gekennzeichnet,**
**dass** das Verfahren für eine Wärmepumpe mit zumindest zwei Wärmeübertragereinheiten (14.1, 14.2) mit mechanokalorischem Material geeignet ist, wobei bevorzugt die in der Kompression des mechanokalorischen Materials einer ersten Wärmeübertragereinheit (14.1) enthaltene potentielle Energie aus der elastischen Verformung des mechanokalorischen Materials zur Kompression des mechanokalorischen Materials einer zweiten Wärmeübertragereinheit (14.2) verwendet wird, vorzugsweise dass die Kompression der beiden Wärmeübertragereinheiten (14.1, 14.2) alternierend erfolgt.

5. Verfahren nach einem der vorangegangenen Ansprüche 1 bis 3,
**dadurch gekennzeichnet,**
**dass** das Verfahren für eine Wärmekraftmaschine mit zumindest zwei Wärmeübertragereinheiten (14.1, 14.2) mit mechanokalorischem Material geeignet ist und durch die Temperaturänderungen des mechanokalorischen Materials ein magnetisierbarer Kern (15b) in einer Spule bewegt wird und/oder
**dass** das Verfahren für eine Wärmekraftmaschine mit zumindest zwei Wärmeübertragereinheiten (14.1, 14.2) mit mechanokalorischem Material ausgebildet ist, wobei das Heißseitenventil (7) und das Kaltseitenventil (8) mit einer Wechselfrequenz zueinander alternierend geöffnet und geschlossen werden, vorzugsweise mit einer Wechselfrequenz zwischen 0,1 Hz und 10 kHz, vorzugsweise 50 Hz.

6. Verfahren nach einem der vorangegangenen Ansprüche 1 bis 4,
**dadurch gekennzeichnet,**
**dass** das Verfahren für eine Wärmepumpe mit zumindest zwei Wärmeübertragereinheiten (14.1, 14.2) mit mechanokalorischem Material ausgebildet ist, wobei das Heißseitenventil (7, 17) und das Kaltseitenventil (8, 18) mit einer Wechselfrequenz zueinander alternierend geöffnet und geschlossen werden, vorzugsweise mit einer Wechselfrequenz größer als 10 Hz, bevorzugt größer als 100 Hz, insbesondere bevorzugt zwischen 1 kHz und 10 kHz.

7. Vorrichtung zum Transport oder zur Umwandlung von Energie,
betreibbar als Wärmepumpe oder Wärmekraftmaschine,
mit einem Heißseitenreservoir und einem Kaltseitenreservoir für ein Fluid (3) und zumindest einer Wärmeübertragereinheit (4, 14) mit mechanokalorischem Material, wobei
das mechanokalorische Material in Wirkverbindung mit dem Fluid (3) angeordnet ist, sodass Wärme zwischen Fluid (3) und mechanokalorischem Material übertragbar ist,
welche Vorrichtung Mittel zur Erzeugung einer mechanischen Spannung (5, 15, 19) in dem mechanokalorischen Material aufweist, sodass das mechanokalorische Material in einem Wechselwirkungsbereich eines mechanischen Spannungsfeldes angeordnet ist,
oder in mechanischer Wirkverbindung mit dem mechanokalorischen Material Mittel zur Anwendung von Energie aus Bewegung (15, 19) angeordnet sind, **dadurch gekennzeichnet,**
**dass** die Vorrichtung mit einem Fluidkreislauf ausgebildet ist, welcher Fluidkreislauf als druckdichtes System ausgebildet ist und im Wesentlichen alle Fremdgase aus dem druckdichten System entfernt sind, sodass der Wärmeübertrag zwischen Fluid (3) und mechanokalorischem Material im Wesentlichen mittels latenten Wärmeübertrags in Form von Verdampfungs- und Kondensationswärme des Fluids erfolgt.

8. Vorrichtung nach Anspruch 7,
**dadurch gekennzeichnet,**
**dass** das mechanokalorische Material als poröses Material, vorzugsweise als offenporiges Material ausgebildet ist und/oder dass das mechanokalorische Material mit einer Bienenwabenstruktur, als Stiftstruktur oder als Feder ausgebildet ist und/oder dass das mechanokalorische Material eine Strukturierung und/oder Beschichtung aufweist, vorzugsweise eine Nanostrukturierung und/oder eine hydrophile Beschichtung.

9. Vorrichtung nach einem der vorangegangenen Ansprüche 7 oder 8,
**dadurch gekennzeichnet,**
**dass** die Vorrichtung zumindest ein Heißseitenventil (7, 17) und zumindest ein Kaltseitenventil (8, 18) umfasst, vorzugsweise sind Heißseitenventil (7, 17) und Kaltseitenventil (8, 18) als druckgesteuerte oder als aktiv gesteuerte Ventile ausgebildet
und/oder
**dass** die Vorrichtung eine Fluidrückführung (6, 16) umfasst, insbesondere dass der Fluidkreislauf mit Heißseitenreservoir (1, 11, 21), Kaltseitenreservoir (2, 12, 22), Heißseitenventil (7, 17), Kaltseitenventil (8, 18), mechanokalorischem Material und Fluidrückführung (6, 16) das druckdichte System bilden.

10. Vorrichtung nach Anspruch
**dadurch gekennzeichnet,**
**dass** das Heißseitenventil (7, 17) derart ausgebildet ist und im Fluidkreislauf zwischen Heißseitenreservoir (1, 11, 21) und mechanokalorischem Material angeordnet ist, dass durch ein Erwärmen des mechanokalorischen Materials das Heißseitenventil (7, 17) geöffnet wird und das Kaltseitenventil (8, 18) derart ausgebildet ist und im Fluidkreislauf zwischen Kaltseitenreservoir (2, 12, 22) und mechanokalorischem Material angeordnet ist, dass durch ein Abkühlen des mechanokalorischen Materials das Kaltseitenventil (8, 18) geöffnet wird.

11. Vorrichtung nach einem der vorangegangenen Ansprüche 7 bis 10,
**dadurch gekennzeichnet,**
**dass** Kaltseitenreservoir (2, 12, 22), Heißseitenreservoir (1, 11, 21) und mechanokalorisches Material in einem abgeschlossenen Volumen (29) angeordnet sind, welches derart ausgebildet ist, dass der Wärmetransport mittels Konvektion des verdampften Fluids (3) erfolgt und ein Rücktransport des kondensierten Fluids (3) erfolgt, insbesondere
**dass** das abgeschlossene Volumen (29) im Bereich des Heißseitenreservoirs (2) eine fluidphobe Beschichtung und/oder Strukturierung aufweist und/oder im Bereich des Kaltseitenreservoirs (2) eine fluidphile Beschichtung und/oder Strukturierung
und/oder
**dass** das abgeschlossene Volumen (29) im Bereich des Heißseitenreservoirs (2) eine hydrophile Beschichtung und/oder Strukturierung aufweist und/oder im Bereich des Kaltseitenreservoirs (2) eine hydrophobe Beschichtung und/oder Strukturierung
und/oder
**dass** das abgeschlossene Volumen (29) im Bereich des Heißseitenreservoirs (2) eine oleophile Beschichtung und/oder Strukturierung aufweist und/oder im Bereich des Kaltseitenreservoirs (2) eine oleophobe Beschichtung und/oder Strukturierung.

12. Vorrichtung nach einem der vorangegangenen Ansprüche 7 bis 11,
**dadurch gekennzeichnet,**
**dass** die Vorrichtung zumindest zwei Wärmeübertragereinheiten (4.1, 4.2, 14.1, 14.2) mit mechanokalorischem Material umfasst und dass die Mittel zur Erzeugung einer mechanische Spannung (5, 15, 19) derart mit den beiden Wärmeübertragereinheiten (4.1, 4.2, 14.1, 14.2) zusammenwirkend angeordnet und ausgebildet sind, dass die beiden Wärmeübertragereinheiten (4.1, 4.2, 14.1, 14.2) alternierend belastbar sind, vorzugsweise dass die zumindest zwei Wärmeübertragereinheiten (14.1, 14.2) mit mechanokalorischem Material jeweils in einem einseitig geschlossenen Zylinder (5a.1, 5a.2) angeordnet sind und mittig ein Kolben (5b) zur alternierenden Kompression des mechanokalorischen Materials angeordnet ist.

13. Vorrichtung nach einem der vorangegangenen Ansprüche 7 bis 12,
**dadurch gekennzeichnet,**
**dass** die Vorrichtung einen Exzenter als Mittel zur Erzeugung einer mechanischen Spannung (5, 15, 19) zur Zug- und/oder Druckbelastung des mechanokalorischen Materials aufweist, vorzugsweise als Teil einer Common-Rail-Pumpe.

14. Vorrichtung nach einem der vorangegangenen Ansprüche 7 bis 13,
**dadurch gekennzeichnet,**
**dass** die Vorrichtung als Wärmepumpe ausgebildet ist und als Mittel zur Erzeugung einer mechanischen Spannung (5, 15, 19) zur Zug- und/oder Druckbelastung ein Kolbensystem (5, 15, 19), vorzugsweise ein Zylinder-KolbenAggregat aufweist
und/oder
**dass** die Vorrichtung als Wärmepumpe ausgebildet ist und eine Spule (19) mit einem vorzugsweise magnetisierbaren Kern (15) aufweist, sodass durch eine Bestromung der Spule eine Bewegung des Kerns (15) in der Spule (19) und damit eine Kompression und eine Temperaturänderung des mechanokalorischen Materials erzeugt wird.

15. Vorrichtung nach einem der vorangegangenen Ansprüche 7 bis 14,
**dadurch gekennzeichnet,**
**dass** die Vorrichtung als Wärmekraftmaschine ausgebildet ist und eine Spule (19) mit einem vorzugsweise magnetisierbaren Kern (15) aufweist, sodass durch eine Temperaturänderung des mechanokalorischen Materials eine Bewegung des Kerns (15) in der Spule (19) und damit ein elektrischer Strom erzeugt wird.

## Claims

1. Method for the cyclic operation of cycle-based systems having a hot-side reservoir (1, 11, 21) and a cold-side reservoir (2, 12, 22) for a fluid (3) and at least one heat exchanger unit (4) having mechanocaloric material, wherein the mechanocaloric material of the heat exchanger unit (4) is arranged in operative connection with the fluid (3), so that a transfer of heat takes place between mechanocaloric material and fluid (3), and a change in the volume and/or shape of the mechanocaloric material is generated by mechanical stress in the mechanocaloric material or by transfer of heat between the mechanocaloric material and the fluid,
**characterised in that**
the transfer of heat between mechanocaloric material and fluid (3) takes place substantially by means of latent heat transfer in the form of heat of vaporisation and heat of condensation of the fluid.

2. Method according to claim 1,
**characterised in that**
the change in the shape of the mechanocaloric material that is generated by mechanical stress in the mechanocaloric material is preferably generated by subjection of the mechanocaloric material to tensile and/or compressive stress, by shearing and/or by compression of the mechanocaloric material, most preferably via a piston system (5), wherein a change in the temperature of the mechanocaloric material is generated by the subjection of the mechanocaloric material to tensile and/or compressive stress.

3. Method according to either one of the preceding claims,
**characterised in that**
transport of the fluid (3) from or to the hot-side reservoir (1, 11, 21) is controlled by opening of a hot-side valve (7, 17) between mechanocaloric material and hot-side reservoir (1, 11, 21); and transport of the fluid (3) from or to the cold-side reservoir (2, 12, 22) is controlled by opening of a cold-side valve (8) between mechanocaloric material and cold-side reservoir (2, 12, 22).

4. Method according to any one of the preceding claims,
**characterised in that**
the method is suitable for a heat pump having at least two heat exchanger units (14.1, 14.2) having mechanocaloric material, wherein preferably the potential energy from the elastic deformation of the mechanocaloric material, which energy is contained in the compression of the mechanocaloric material of a first heat exchanger unit (14.1), is used for compression of the mechanocaloric material of a second heat exchanger unit (14.2); preferably the compression of the two heat exchanger units (14.1, 14.2) takes place alternately.

5. Method according to any one of preceding claims 1 to 3,
**characterised in that**
the method is suitable for a heat engine having at least two heat exchanger units (14.1, 14.2) having mechanocaloric material, and the changes in the temperature of the mechanocaloric material cause a magnetisable core (15b) to be moved in a coil,
and/or
the method is designed for a heat engine having at least two heat exchanger units (14.1, 14.2) having mechanocaloric material, wherein the heat-side valve (7) and the cold-side valve (8) are opened and closed alternately to one another at an alternation frequency, preferably at an alternation frequency between 0.1 Hz and 10 kHz, preferably 50 Hz.

6. Method according to any one of preceding claims 1 to 4,
**characterised in that**
the method is designed for a heat pump having at least two heat exchanger units (14.1, 14.2) having mechanocaloric material, wherein the heat-side valve (7, 17) and the cold-side valve (8, 18) are opened and closed alternately to one another at an alternation frequency, preferably at an alternation frequency greater than 10 Hz, preferably greater than 100 Hz, especially preferably between 1 kHz and 10 kHz.

7. Device for transporting or converting energy, operable as a heat pump or heat engine,
having a hot-side reservoir and a cold-side reservoir for a fluid (3) and at least one heat exchanger unit (4, 14) having mechanocaloric material, wherein
the mechanocaloric material is arranged in operative connection with the fluid (3), so that heat is transferrable between fluid (3) and mechanocaloric material,
which device has means for generating mechanical stress (5, 15, 19) in the mechanocaloric material, so that the mechanocaloric material is arranged in an interaction region of a mechanical stress field,
or means for using energy from movement (15, 19) are arranged in mechanical operative connection with the mechanocaloric material,
**characterised in that**
the device is designed with a fluid circuit, which fluid circuit is designed as a pressure-tight system, and substantially all foreign gases are removed from the pressure-tight system, so that the transfer of heat between fluid (3) and mechanocaloric material takes place substantially by means of latent heat transfer in the form of heat of vaporisation and heat of condensation of the fluid.

8. Device according to claim 7,
**characterised in that**
the mechanocaloric material is in the form of a porous material, preferably in the form of a open-pored material, and/or the mechanocaloric material is formed with a honeycomb structure, as a pin structure or as a spring, and/or the mechanocaloric material has structuring and/or a coating, preferably nanostructuring and/or a hydrophilic coating.

9. Device according to either one of preceding claims 7 and 8,
**characterised in that**
the device comprises at least one hot-side valve (7, 17) and at least one cold-side valve (8, 18), the hot-side valve (7, 17) and cold-side valve (8, 18) preferably being in the form of pressure-controlled valves or in the form of actively controlled valves,
and/or
the device comprises a fluid return line (6, 16); especially the fluid circuit with the hot-side reservoir (1, 11, 21), cold-side reservoir (2, 12, 22), hot-side valve (7, 17), cold-side valve (8, 18), mechanocaloric material and fluid return line (6, 16) forms the pressure-tight system.

10. Device according to claim 9,
**characterised in that**
the hot-side valve (7, 17) is designed and arranged in the fluid circuit between hot-side reservoir (1, 11, 21) and mechanocaloric material in such a way that the hot-side valve (7, 17) is opened by heating of the mechanocaloric material, and the cold-side valve (8, 18) is designed and arranged in the fluid circuit between cold-side reservoir (2, 12, 22) and mechanocaloric material in such a way that the cold-side valve (8, 18) is opened by cooling of the mechanocaloric material.

11. Device according to any one of preceding claims 7 to 10,
**characterised in that**
cold-side reservoir (2, 12, 22), hot-side reservoir (1, 11, 21) and mechanocaloric material are arranged in a closed volume (29) which is designed in such a way that the transport of heat is effected by means of convection of the vaporised fluid (3), and return transport of the condensed fluid (3) takes place; especially the closed volume (29) has a fluidophobic coating and/or structuring in the region of the hot-side reservoir (2) and/or a fluidophilic coating and/or structuring in the region of the cold-side reservoir (2)
and/or
the closed volume (29) has a hydrophilic coating and/or structuring in the region of the hot-side reservoir (2) and/or a hydrophobic coating and/or structuring in the region of the cold-side reservoir (2)
and/or
the closed volume (29) has an oleophilic coating and/or structuring in the region of the hot-side reservoir (2) and/or an oleophobic coating and/or structuring in the region of the cold-side reservoir (2).

12. Device according to any one of preceding claims 7 to 11,
**characterised in that**
the device comprises at least two heat exchanger units (4.1, 4.2, 14.1, 14.2) having mechanocaloric material; and the means for generating mechanical stress (5, 15, 19) are arranged and designed so as to cooperate with the two heat exchanger units (4.1, 4.2, 14.1, 14.2) in such a way that the two heat exchanger units (4.1, 4.2, 14.1, 14.2) can be subjected to stress alternately; preferably the at least two heat exchanger units (14.1, 14.2) having mechanocaloric material are each arranged in a cylinder that is closed at one end (5a.1, 5a.2), and a piston (5b) is arranged centrally for alternating compression of the mechanocaloric material.

13. Device according to any one of preceding claims 7 to 12,
**characterised in that**
the device has an eccentric as means for generating mechanical stress (5, 15, 19) for subjecting the mechanocaloric material to tensile and/or compressive stress, preferably as part of a common rail pump.

14. Device according to any one of preceding claims 7 to 13,
**characterised in that**
the device is in the form of a heat pump and has a piston system (5, 15, 19), preferably a cylinder/piston assembly, as means for generating mechanical stress (5, 15, 19) for the application of tensile and/or compressive stress
and/or
the device is in the form of a heat pump and has a coil (19) with a core (15), which is preferably magnetisable, so that energisation of the coil generates movement of the core (15) in the coil (19) and accordingly compression and a change in the temperature of the mechanocaloric material.

15. Device according to any one of preceding claims 7 to 14,
**characterised in that**
the device is in the form of a heat engine and has a coil (19) having a core (15), which is preferably magnetisable, so that a change in the temperature of the mechanocaloric material generates movement of the core (15) in the coil (19) and accordingly an electric current.

## Revendications

1. Procédé de fonctionnement cyclique de systèmes basés sur des cycles comprenant un réservoir côté chaud (1, 11, 21) et un réservoir côté froid (2, 12, 22) pour un fluide (3) et au moins une unité de transfert de chaleur (4) comprenant du matériau mécano-calorique, dans lequel le matériau mécano-calorique de l'unité de transfert de chaleur (4) est agencé en liaison active avec le fluide (3) de telle sorte qu'un transfert de chaleur ait lieu entre le matériau mécano-calorique et le fluide, et qu'une modification de volume et/ou de forme du matériau mécano-calorique soit générée par une tension mécanique dans le matériau mécano-calorique ou par un transfert de chaleur entre le matériau mécano-calorique et le fluide,
**caractérisé en ce que**
le transfert de chaleur entre le matériau mécano-calorique et le fluide (3) se fait essentiellement au moyen d'un transfert de chaleur latent sous forme de chaleur d'évaporation et de condensation du fluide.

2. Procédé selon la revendication 1,
**caractérisé en ce que**
le changement de forme du matériau mécano-calorique est généré par une tension mécanique dans le matériau mécano-calorique, de préférence par une sollicitation de traction et/ou de pression du matériau mécano-calorique, un cisaillement et/ou une compression du matériau mécano-calorique, de manière préférée entre toutes par l'intermédiaire d'un système de piston (5), dans lequel un changement de température du matériau mécano-calorique est généré par la sollicitation de traction et/ou de pression du matériau mécano-calorique.

3. Procédé selon l'une des revendications précédentes,
**caractérisé en ce que**
un transport du fluide (3) depuis le réservoir côté chaud (1, 11, 21) ou à celui-ci est commandé par une ouverture d'une vanne côté chaud (7, 17) entre le matériau mécano-calorique et le réservoir côté chaud (1, 11, 21) et qu'un transport du fluide (3) depuis le réservoir côté froid (2, 12, 22) ou à celui-ci est commandé par une ouverture d'une vanne côté froid (8) entre le matériau mécano-calorique et le réservoir côté froid (2, 12, 22).

4. Procédé selon l'une des revendications précédentes,
**caractérisé en ce que**
le procédé est adapté à une pompe à chaleur comprenant au moins deux unités de transfert de chaleur (14.1, 14.2) comprenant du matériau mécano-calorique, dans lequel on utilise de préférence l'énergie potentielle contenue dans la compression du matériau mécano-calorique d'une première unité de transfert de chaleur (14.1) à partir de la déformation élastique du matériau mécano-calorique pour la compression du matériau mécano-calorique d'une seconde unité de transfert de chaleur (14.2), que la compression des deux unités de transfert de chaleur (14.1, 14.2) est de préférence effectuée en alternance.

5. Procédé selon l'une des revendications précédentes 1 à 3,
**caractérisé en ce que**
le procédé est adapté à un moteur thermique comprenant au moins deux unités de transfert de chaleur (14.1, 14.2) comprenant du matériau mécano-calorique et un noyau (15b) magnétisable est déplacé dans une bobine par les modifications de température du matériau mécano-calorique
et/ou
le procédé est réalisé pour un moteur thermique comprenant au moins deux unités de transfert de chaleur (14.1, 14.2) comprenant du matériau mécano-calorique, dans lequel la vanne côté chaud (7) et la vanne côté froid(8) sont ouvertes et fermées en alternance l'une de l'autre avec une fréquence de changement, de préférence avec une fréquence de changement comprise entre 0,1 Hz et 10 kHz, de préférence de 50 Hz.

6. Procédé selon l'une des revendications précédentes 1 à 4,
**caractérisé en ce que**
le procédé est réalisé pour une pompe à chaleur comprenant au moins deux unités de transfert de chaleur (14.1, 14.2) comprenant du matériau mécano-calorique, dans lequel la vanne côté chaud (7, 17) et la vanne côté froid (8, 18) sont ouvertes et fermées en alternance l'une de l'autre avec une fréquence de changement, de préférence avec une fréquence de changement supérieure à 10 Hz, de préférence supérieure à 100 Hz, en particulier de préférence comprise entre 1 kHz et 10 kHz.

7. Dispositif de transport ou de conversion d'énergie, pouvant fonctionner en tant que pompe à chaleur ou moteur thermique, comprenant un réservoir côté chaud et un réservoir côté froid pour un fluide (3) et au moins une unité de transfert de chaleur (4, 14) comprenant du matériau mécano-calorique, dans lequel le matériau mécano-calorique est agencé en liaison active avec le fluide (3) de telle sorte que de la chaleur puisse être transmise entre le fluide (3) et le matériau mécano-calorique,
lequel dispositif présente des moyens pour la génération d'une tension mécanique (5, 15, 19) dans le matériau mécano-calorique de telle sorte que le matériau mécano-calorique soit agencé dans une zone d'interaction d'un champ de tension mécanique,
ou des moyens pour l'application d'énergie provenant de mouvement (15, 19) sont agencés en liaison active mécanique avec le matériau mécano-calorique,
**caractérisé en ce que**
le dispositif est réalisé avec un circuit de fluide, lequel circuit de fluide est réalisé en tant que système étanche à la pression et sensiblement tous les gaz externes sont retirés du système étanche à la pression de telle sorte que le transfert de chaleur entre le fluide (3) et le matériau mécano-calorique soit effectué essentiellement au moyen du transfert de chaleur latent sous forme de chaleur d'évaporation et de condensation du fluide.

8. Dispositif selon la revendication 7,
**caractérisé en ce que**
le matériau mécano-calorique est réalisé en tant que matériau poreux, de préférence en tant que matériau à pores ouverts et/ou le matériau mécano-calorique est réalisé avec une structure en nid d'abeille, en tant que structure de tige ou en tant que ressort et/ou le matériau mécano-calorique présente une structuration et/ou un revêtement, de préférence une nano-structuration et/ou un revêtement hydrophile.

9. Dispositif selon l'une des revendications précédentes 7 et 8,
**caractérisé en ce que**
le dispositif comporte au moins une vanne côté chaud (7, 17) et au moins une vanne côté froid (8, 18), de préférence la vanne côté chaud (7, 17) et la vanne côté froid (8, 18) sont réalisées en tant que vannes commandées par la pression ou en tant que vannes commandées activement
et/ou
le dispositif comporte un recyclage de fluide (6, 16), en particulier
le circuit de fluide comprenant le réservoir côté chaud (1, 11, 21), le réservoir côté froid (2, 12, 22), la vanne côté chaud (7, 17), la vanne côté froid (8 18), le matériau mécano-calorique et le recyclage de fluide (6, 16) forment le système étanche à la pression.

10. Dispositif selon la revendication 9,
**caractérisé en ce que**
la vanne côté chaud (7, 17) est réalisée et est agencée dans le circuit de fluide entre le réservoir côté chaud (1, 11, 21) et le matériau mécano-calorique de telle manière que la vanne côté chaud (7, 17) soit ouverte par un chauffage du matériau mécano-calorique et la vanne côté froid (8, 18) est réalisée et est agencée dans le circuit de fluide entre le réservoir côté froid (2, 12, 22) et le matériau mécano-calorique de telle manière que la vanne côté froid (8, 18) soit ouverte par un refroidissement du matériau mécano-calorique.

11. Dispositif selon l'une des revendications précédentes 7 à 10,
**caractérisé en ce que**
le réservoir côté froid (2, 12, 22), le réservoir côté chaud (1, 11, 21) et le matériau mécano-calorique sont agencés dans un volume (29) fermé qui est réalisé de telle manière que le transport thermique soit effectué par la convexion du fluide évaporé (3) et un transport en retour du fluide (3) condensé, en particulier
le volume (29) fermé dans la zone du réservoir côté chaud (2) présente un revêtement et/ou une structuration fluidophobe et/ou dans la zone du réservoir côté froid (2) un revêtement ou une structuration fluidophile
et/ou
le volume (29) fermé dans la zone du réservoir côté chaud (2) présente un revêtement et/ou une structuration hydrophile et/ou dans la zone du réservoir côté froid (2) un revêtement et/ou une structuration hydrophobe
et/ou
le volume (29) fermé dans la zone du réservoir côté chaud (2) présente un revêtement et/ou une structuration oléophile et/ou dans la zone du réservoir côté froid (2) un revêtement et/ou une structuration oléophobe.

12. Dispositif selon l'une des revendications précédentes 7 à 11,
**caractérisé en ce que**
le dispositif comporte au moins deux unités de transfert de chaleur (4.1, 4.2, 14.1, 14.2) comprenant du matériau mécano-calorique et les moyens de génération d'une tension mécanique (5, 15, 19) sont agencés et réalisés en coopération avec les deux unités de transfert de chaleur (4.1, 4.2, 14.1, 14.2) de telle manière que les deux unités de transfert de chaleur (4.1, 4.2, 14.1, 14.2) puissent être sollicitées en alternance, de préférence les au moins deux unités de transfert de chaleur (14.1, 14.2) comprenant du matériau mécano-calorique sont agencées respectivement dans un cylindre (5a.1, 5a.2) fermé d'un côté et un piston (5b) est agencé au milieu pour la compression alternative du matériau mécano-calorique.

13. Dispositif selon l'une des revendications précédentes 7 à 12,
**caractérisé en ce que**
le dispositif présente une excentrique en tant que moyens pour la génération d'une tension mécanique (5, 15, 19) pour la sollicitation de traction et/ou de pression du matériau mécano-calorique, de préférence en tant que partie d'une pompe à rampe commune.

14. Dispositif selon l'une des revendications précédentes 7 à 13,
**caractérisé en ce que**
le dispositif est réalisé en tant que pompe à chaleur et présente en tant que moyens pour la génération d'une tension mécanique (5, 15, 19) pour la sollicitation de traction et/ou de pression un système de pistons (5, 15, 19), de préférence un groupe de cylindres et pistons
et/ou
le dispositif est réalisé en tant que pompe à chaleur et présente une bobine (19) comprenant un noyau (15) de préférence magnétisable de telle sorte qu'un mouvement du noyau (15) dans la bobine (19) et ainsi une compression et une modification de température du matériau mécano-calorique soient générés par un passage de courant dans la bobine.

15. Dispositif selon l'une des revendications précédentes 7 à 14,
**caractérisé en ce que** le dispositif est réalisé en tant que moteur thermique et présente une bobine (19) comprenant un noyau(15) de préférence magnétisable de telle sorte qu'un mouvement du noyau (15) dans la bobine (19) et ainsi un courant électrique soient générés par une modification de température du matériau mécano-calorique.
